Europäisches Patentamt

European Patent Office

Office européen des brevets

(19)

(11) **EP 1 479 971 A1**

(12) **EUROPEAN PATENT APPLICATION**
published in accordance with Art. 158(3) EPC

(43) Date of publication:
**24.11.2004 Bulletin 2004/48**

(51) Int Cl.⁷: **F23G 7/04**, F23G 5/02,
F23G 5/50, C02F 1/02

(21) Application number: **03701888.4**

(22) Date of filing: **27.01.2003**

(86) International application number:
**PCT/JP2003/000738**

(87) International publication number:
**WO 2003/064926 (07.08.2003 Gazette 2003/32)**

(84) Designated Contracting States:
**AT BE BG CH CY CZ DE DK EE ES FI FR GB GR
HU IE IT LI LU MC NL PT SE SI SK TR**

(30) Priority: **28.01.2002 JP 2002019037**

(71) Applicant: **Sekiguchi Co., Ltd.
Maebashi-shi, Gunma 371-0034 (JP)**

(72) Inventors:
• **SEKIGUCHI, Shinichi
Bunkyo-ku, Tokyo 112-0011 (JP)**
• **OOYA, Youichi,
c/o KURITA WATER INDUSTRIES LTD.
Shinjuku-ku, Tokyo 160-8383 (JP)**
• **SATO, Yukio,
c/o KURITA WATER INDUSTRIES LTD.
Shinjuku-ku, Tokyo 160-8383 (JP)**

• **IGUCHI, Tooru,
c/o KURITA WATER INDUSTRIES LTD.
Shinjuku-ku, Tokyo 160-8383 (JP)**
• **SATAKE, Kazuhiko
Chiyoda-ku, Tokyo 100-8321 (JP)**
• **KOIDE, Kiemon
Sodegaura-shi, Chiba 299-0205 (JP)**
• **ISEYA, Akira
Sodegaura-shi, Chiba 299-0205 (JP)**

(74) Representative: **Appelt, Christian W.
FORRESTER & BOEHMERT
Anwaltssozietät
Pettenkoferstrasse 20-22
80336 München (DE)**

(54) **INDUSTRIAL COMBUSTION EQUIPMENT FOR DISPOSING WASTE WATER, AND WASTE WATER DISPOSAL METHOD USING THE EQUIPMENT**

(57)      By understanding the operational situation of the industrial combustion equipment by signals from the fuel flux meter supplied to industrial combustion equipment, and controlling the waste fluid flux accurately and suitably, the optimal waste fluid processing can be realized according to the kind of waste fluid and combustion equipment, while preventing discharge of untreated waste fluid at the time of low combustion, before the termination of the burner and immediately after ignition and preventing a harmful influences to a fuel system, a burner, or a smoke path associated with mixing waste fluid.

F I G . 4

## Description

## Technical Field

The present invention relates to an industrial combustion equipment for processing waste fluid, and a waste fluid processing method using the equipment.

## Background Art

Waste fluid is a side product mainly produced along side the production equipment in factories etc., and the industrial activity of medical and research institutions etc. It is especially indicative of a liquid substance which is valuable but not able to sell. Furthermore the waste fluid is classified into inorganic waste fluid containing the inorganic acid, group, and salt etc., and organic waste fluid containing the organic acid, base, organic compound etc. At this point, the inorganic waste fluid cannot be a serious obstacle for the environment as it is relatively easy to be purified by processing of neutralization precipitation etc.

However, in the case of the organic system waste fluid, although it may be able to be purified by the biological processing method when concentration is low, processing is difficult when the waste fluid has high concentration or it contains unsuitable components for biological processing.

The organic system waste fluid, furthermore, is divided broadly into three kinds, hydrophilic nature (arbitrarily mixed with water), lyophilic nature (arbitrarily mixed with oil), and emulsion nature (which water and oil changed into the emulsification state), and especially the waste fluid with hydrophilic nature is especially called waste water and this with a lyophilic nature is called waste oil etc.

Next is an explanation outlining the conventional processing method of waste fluid. Waste in a factory is taken over by an industrial waste treatment company as industrial waste, and then an industrial waste contractor disposes using methods of landfill, evaporation drying, and incineration by the incinerator. Moreover, some are performing incineration with the incinerator at its company. Furthermore, some may be processing using liquid-waste-treatment equipment.

[Landfill]

Once a drum and another sealed container are filled up with waste fluid, it carries to the last disposal place, and the landfill is performed.

[Evaporation Drying]

After reducing waste fluid by evaporating volatile ingredients through heat treatment with steam or high-temperature heating medium etc., it is disposed as a solid, or performs the landfill disposal by mixing concrete etc. at the final disposal place.

[Disposal by the incinerator]

Blowing waste fluid into the incinerator for solid incineration, disposes it by performing evaporation and thermal decomposition in high temperature atmosphere.

[Disposal by the waste water treatment equipment]

When the amount of waste water is little and it does not include a harmful ingredient in the waste fluid, the process injects a little amount at a time into the waste water treatment equipment.

By the above disposal method, however, it has the following problems.

[Landfill and evaporation drying]

For landfill and evaporation drying, there is a call for streamlining due to difficulty in getting waste disposal place etc. Also if waste has harmful nature, it leaves the problem of the environmental pollution by secondary outflow.

[Disposal by the incinerator]

In an incinerator, since there are few cases which bum in a waste fluid by itself, it requires the auxiliary fuel for maintaining the inside of the incinerator at high temperature. However, since it is difficult to recover the heat quantity which is used the auxiliary fuel disposal cost goes up.

[Disposal by the waste water treatment equipment]

Although processing is possible if there is no harmful ingredients included in the waste fluid, the waste is processed beyond its original processing ability in the case of a biological processing and if perchance a harmful ingredient is mixed in the waste fluid, the balance of the biological processing collapses and it affects to the processing of general waste water which must originally be processed. Moreover, in the case of the biological processing, since time for living things to be discomposed becomes long, generally waste fluid with a lyophilic nature or an emulsion nature is difficult to process more and more.

Moreover, in the case of the lyophilic nature or the emulsion nature, although it is removable using oily waste fluid separation method such as a dissolved air flotation method, coagulation sedimentation etc., it is basically a method which not only separates the solid called sludge, the amount of sludge also increases by the coagulant to be used and the sludge waste disposal fee after processing becomes an expensive thing.

Here, it is also considered that disposal using the industrial combustion equipment such as a waste fluid combustion furnace, various boilers, etc., other than the above disposal method.

[Disposal by industrial combustion equipment (waste fluid combustion furnace)]

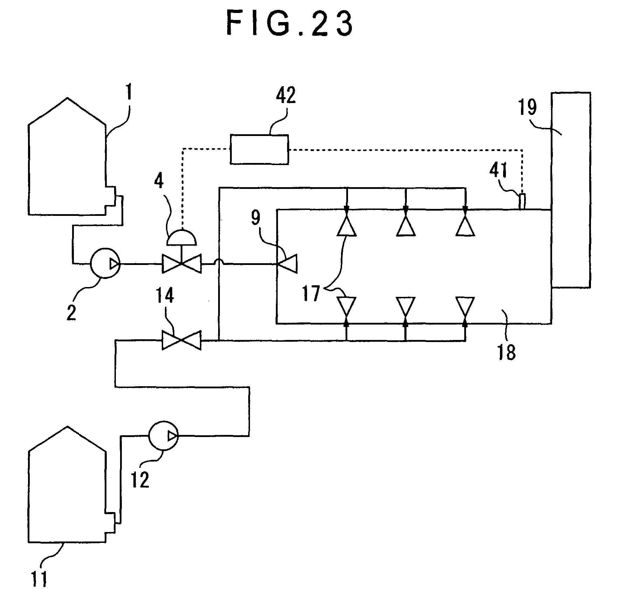

Fig. 23 is an example of waste fluid incineration equipment. The fuel transported from the fuel tank 1 to the fuel pump 2 is sent to the burner 9 via the fuel flux adjustment valve 4, and is sprayed into the burner 18, then bums. The temperature dispatch machine 41 is set in the burner 18, and sends a burner temperature signal to the temperature adjustment machine 42. Based on this temperature, the temperature adjustment machine 42 controls the fuel flux adjustment valve 4, and keeps the burner temperature constant.

If the inside of the burner 18 reaches the temperature suitable for the waste fluid to evaporate and thermally decompose, the waste fluid spray machine 17 sprays the waste fluid which is transported from the waste fluid tank 11 through the waste fluid pump 12, then it evaporates and thermally decomposes in the burner 18. Although sometimes the waste fluid flux control is performed automatically, it adopts the method which keeps the defined flux constant in general. Therefore, as for the waste fluid flux adjustment valve 14, the fixed flux is used.

The basic principle of the waste fluid spray machine 17 is almost the same as that of the usual burner, and there is no specific difference. However, since it does not have the control width in many cases as per its characteristics, it does not require the spray characteristic or control nature as in the burner 9 for combustion. Rather, resistance to foreign body is required to ensure the nozzle is not blocked by some foreign substances or impurities.

Although the combustion gas of the waste fluid and fuel which were processed turns into an exhaust gas and then is exhausted from the chimney 19, it may be purified by methods, such as desulfurization, denitrification, dust removal, activated carbon adsorption, etc., depending on the ingredient contained in the exhaust gas.

[Disposal by industrial combustion equipment (boiler)]

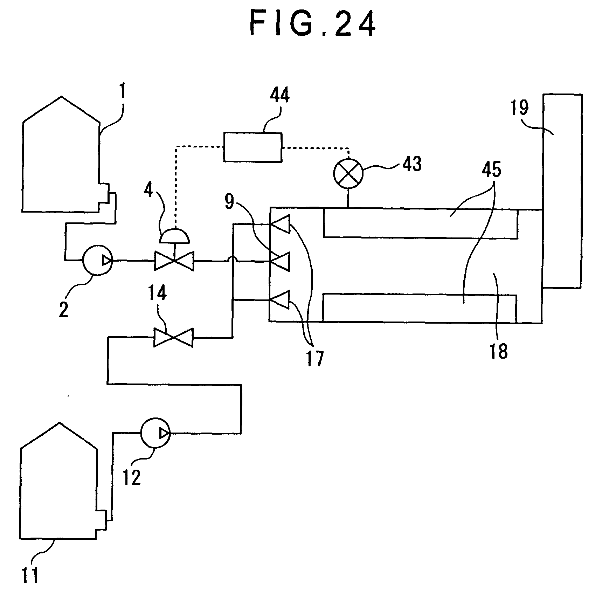

The boiler shown in Fig. 24 heats the water in the water drum 45 which is prepared in the burner 18 and generates steam, and it prepares the waste fluid spray machine 17 to spray waste fluid in the same direction as fuel at near the burner 9 for fuel spray. Moreover, the pressure dispatch machine 43 to detect steam pressure power is provided in the water drum 45, and it sends pressure signal to pressure adjustment machine 44. Based on the pressure concerned, the pressure adjustment machine 44 controls the fuel flux adjustment valve 4, and keeps the burner temperature constant.

In this type of boiler, although it is to bum fuel in the burner 9, it is the same as the waste fluid combustion furnace mentioned above if it simultaneously performs thermal decomposition of waste fluid by supplying waste fluid in a burner with waste fluid spray machine 17, and it has the same composition as the supply line of waste fluid.

[Disposal by industrial combustion equipment (waste fluid combustion furnace)]

However, in the waste fluid spray machine of a waste fluid incinerator, since it is designed for processing either waste water which is a hydrophilic nature or waste oil which is a lyophilic nature, it is hard to process waste oil simultaneously at the waste fluid incinerator designed for waste water processing and vise versa, and if a business place produces waste fluid with both characters, either it should have exclusive waste incinerators for each of them, or should ask an external contractor to process one of them as an industrial waste.

Moreover, since the waste fluid combustion furnace shown in Fig. 23, it does not change the amount of waste fluid processed in many cases, it is easy to produce variation to the thermal decomposition temperature. Also since it has a different flame form by combustion loads, it is unsure about whether the sprayed waste fluid is definitely processed under high temperature in the large combustion range.

Moreover, even in the boiler shown in Fig. 24, since the amount of waste fluid processed does not change in many cases, the same uneasiness as the above-mentioned waste fluid combustion furnace remains. Furthermore, since the waste fluid spray machine 17 was prepared near the burner 9, it did not become popular as it was easy to receive radiation from the combustion heat, it causes faults by radiant heat if there is no waste fluid, and it has restrictions at the space which newly attaches waste fluid spray machine 17 in a crater.

On the other hand, in the industrial combustion equipment like this type of boiler, it is considered to mix waste fluid in fuel, and spray waste fluid and fuel in the combustion chamber from the same burner. However, in the industrial combustion equipment like boiler etc., in general, it attains the original purpose applying the heat generated in the burner by combustion to heating medium. For this reason, although sufficient thermal energy exists in the burner at the time of steady operation not only to maintain combustion, but to transfer the heat externally, it is required to transmit this thermal energy generated in the burner to the heating medium.

Therefore, since the industrial combustion equipment, in general, is designed to use the fuel with stabilized quality such as calorific value, the viscosity etc. as a premise, mixing waste fluid in the fuel may destroy the original purpose (use of combustion heat) primarily. Moreover, since it was not the original purpose to carry out incineration disposal of the waste fluid, the amount of combustion might fall for the control purpose, or combustion might stop. When injecting waste fluid without careful consideration under this unsteady circumstances, there were many problems which must be solved, such as combustion becomes unstable, the thermal decomposition cannot fully be expected etc.

An object of the present invention is to provide an industrial combustion equipment which can ensure waste fluid being processed efficiently, and a waste fluid processing method using the same, even when fuel and waste fluid are mixed.

**Disclosure of the Invention**

According to the present invention, an industrial combustion equipment for processing waste fluid including a combustion means to burn liquid fuel in a burner, a fuel supply line for supplying fuel to the combustion means, and a fuel transfer means as well as a fuel flux control means both provided at the fuel supply line, the industrial combustion equipment includes: a fuel flux detection means to detect the fuel flux of the fuel supplied by the fuel supply line; a mixing means to mix the fuel and the waste fluid to be processed; a waste fluid injection line for injecting the waste fluid which joins the fuel supply line located on the upstream of the mixing means or the mixing means; a waste fluid flux detection means provided at the waste fluid injection line to detect the flux of the waste fluid; a waste fluid flux control means to control the flux of the waste fluid; a waste fluid transfer means to transport the waste fluid; a multi-point type injection ratio setting means that can set a target injection ratio at multi-points for the waste fluid at any fuel flux; and a proportionality control means that determines, if needed, a target waste fluid flux based on the target injection ratio set by the multi-point type injection ratio setting means as well as by a flux signal sent from the fuel flux detection means, and outputs a proportionality signal to the waste fluid flux control means; the proportionality control means uses at least one point of the target injection ratio of the multi-point injection ratio setting means as an unsteady time injection ratio which is less than the ratio in a steady time flux region when the fuel flux reaches an unsteady time flux region, in order to inject the waste fluid with the flux based on the unsteady time injection ratio, or to be able to stop injection of the waste fluid; and the proportionality control means includes at least any one function among a cognition function to check whether the injection of the waste fluid is regularly performed based on the target injection ratio with the use of at least one information of the variation between or each value of an actual waste fluid flux found by a detection signal sent from the waste fluid flux detection means and the target waste fluid flux, or the variation between or each value of the target injection ratio and an actual injection ratio found by the actual waste fluid flux and a detection signal sent from the fuel flux detection means; a compensation function to rectify the variation in the information; and a safety function to stop the injection of the waste fluid or to inject equal or less amount than a safety ratio when the variation in the information becomes equal to or more than a predetermined regular amount or when the actual injection ratio exceeds the predetermined safety ratio.

According to the present invention, if the combustion means which the industrial combustion equipment possesses currently is a liquid combustion burner, it utilizes the burner concerned and the combustion control means as it is, and this enables the waste fluid disposal. Also it grasps the combustion situation of the industrial combustion equipment by a signal from the fuel flux detection means prepared in the fuel supply line, and it carries out the most appropriate waste fluid disposal in proportion to the amount of combustion at the time of steady operation. However, if the combustion amount reaches at the unsteady region, it prevents the non-decomposed waste fluid generation from an excessive injection whereby realizing that it makes the ratio lower or the injection discontinued, and it injects the right quantity of waste fluid with constant set-up comparing the target value of the waste fluid injection amount with its actual value. By the above things, even when it mixes the fuel and the waste fluid in the mixing means and burns them in the combustion means like the same burner, a good combustion state comes to be acquired, waste fluid processing is ensured efficiently, and the purpose of the present invention is attained.

In addition, in the present invention, it is desirable that the industrial combustion equipment is of a combustion amount variable control type, and as such the industrial combustion equipment has the combustion amount variable position with at least more than two points, and can change the amount of combustion by the requirement of load side.

With a fuel or waste fluid flux detection means which is used in the present invention, in general, although it is indicated as a sensor called the flux meter in many cases, opening of an arm connected with the flux control valve, a reverse pressure in the case of using the reverse pressure spray type burner as a combustion means, and the multi-stage combustion burner, etc., may also become a detection means if they show the fuel flux correctly. Also as a flux meter, it uses the volume type flux meter which measures the passage amount of fluid correctly using. the compression expansion of closed space, such as oval gear, a rotary piston, a root, etc., the differential pressure type flux meter which performs flux measurement measuring differential pressure generated by fluid resistance when passing orifice, the vortex type flux meter which performs flux measurement measuring the frequency of the Karman vortex generated in the lower-stream side of a triangular prism, the electromagnetic flow meter which performs flux measurement measuring electromotive force generated when fluid with conductivity like water passes the flux, the mass flux meter which performs flux measurement by measuring the mass flux which passes a sensor using Coriolis force, and the turbine flux meter which performs flux measurement from a rotation speed which changes according to the flow of fuel or waste fluid using the principle of a propeller or water wheel.

Moreover, as a fuel or waste fluid transfer means, it uses: the gravity fall type which used the gravity of a liquid, the positive displacement pump which performs compression expansion of the closed space capacity using power, and performs suction and discharge of fluid, the gear type pump which is a rotary pump and is transported using the closed space which consists of gear, the vane type pump which is a rotation type pump and uses the closed space formed in the movable board called vane and the cylinder which shaft deflected the root type pump which is a rotation type pump and uses the closed space formed with two sets of elements called root of cocoon shaped form, the plunger type pump which is a reciprocating pump and uses the closed space formed in a piston and a cylinder, the diaphragm type pump which is a reciprocating pump and uses the closed space formed in the elastic deformation of rubber and thin metal plate, the screw type pump using the closed space formed in a rotor with screw form and a stator corresponding to it, the centrifugal type pump, such as single stage and multi stage turbine pump etc., using the centrifugal force which joins in with the liquid, the axial-flow pump, such as single-stage axial-flow pump or multi-stage axial-flow pump, etc., using thrust which joins a propeller, and the friction pump which is a pump using the friction power of a liquid and carrying out the generation of flow velocity, also using the impact strength produced when a direction is changed rapidly, and having a discharge pressure with higher pressure in a single-stage, such as a cascade pump, Wesco pump etc.

As for a fuel and a waste fluid flux control means, it uses a flux control valve, a rotation-control-type positive displacement pump, a pulse-number-control-type pulse pump, etc. A flux control valve is a valve characterized by getting the predetermined flux through by randomly changing the coefficient value called the CV value of a valve arbitrarily in allowable setting range. Although there are many valves called glove system in general, there are also things with shapes like a ball valve. The rotation speed control with the positive displacement pump is the control method which can simultaneously perform transportation of liquids and flux control by changing the rotation speed of the above-mentioned positive displacement pump. Even if it is a reciprocating pump, a pump which can convert into reciprocating power on torque by the cam etc. can use this control method. The pulses number control with a pulse pump is mainly used for reciprocating pump among the positive displacement pump, and it is the control which can carry out the transportation of liquids and the flux control, simultaneously by making it into the driving force of the pump using reciprocating energy generated by on-off of the electromagnetism, and sending the pulse sequence which controls the on-off of the electromagnetism.

According to the present invention, an industrial combustion equipment for processing waste fluid including a combustion means to burn liquid fuel in a burner, a fuel supply line for supplying fuel to the combustion means, and a fuel transfer means as well as a fuel flux control means both provided at the fuel supply line, the industrial combustion equipment includes: a mixing means that mixes the fuel and the waste fluid to be processed, and is located between the fuel flux control means of the fuel supply line and the combustion means; an injection ratio setting means that can set a target injection ratio for the waste fuel at any fuel flux; and a target ratio changing time control means to control the time until the waste fluid reaches the target injection ratio.

If waste fluid has less heat quantity than the fuel does, and injecting the waste fluid before the above-mentioned fuel flux control means, it then creates a problem easily whereby the heat calories originally required by the combustion equipment is insufficient. Such a problem can be solved if it is injected in after a fuel flux control means. However, if new waste fluid is injected rapidly in the condition where the fixed quantity of fuel flux flows, the fuel in the piping line from an injecting point to a burner is pushed away, and the phenomenon of heat calorie exorbitance is produced temporarily while the injected waste fluid with low calorie reaches the burner etc. which is a combustion means. On

EP 1 479 971 A1

the other hand, if waste fluid is suspended rapidly in the condition where the waste fluid was injected and it keeps the balanced condition, a temporary heat calorie insufficient phenomenon is produced.

Then, in the present invention, if the injecting point of waste fluid is made into between a burner and fuel flux control means, it prevents instability of combustion due to the rapidity in the waste fluid amount fluctuation, and it prevents shortage of heat calories in the combustion equipment by adjusting the time it reaches the target injection ratio according to the fuel capacity which exists in the fuel supply line. Moreover, by processing the waste fluid, it is thought that the common thing is that waste fluid runs a short during processing. Even in such a case, naturally it must be taken into consideration that industrial combustion equipment continues combustion for the purpose of the original operation. In such time, if it does not perform a stop operation which decreases the waste fluid injecting amount gradually based on a waste fluid insufficient signal which can be detected by the surface detection means installed in the waste fluid tub, the fault explained above will be produced. Moreover, depending on the kind of waste fluid, there is a case that it may not want to leave any processing residuals, in such a case, since it is not easy to calculate the residual quantity until it uses up exactly from insufficient prediction, it can also select the operation method to use up waste fluid diluting by continuing injection resulting in the supply of water which is available when waste fluid runs out. As mentioned above, even in the present invention, in case of mixing fuel and waste fluid, it can ensure waste fluid processing efficiently, and the purpose of the present invention is attained.

According to the present invention, an industrial combustion equipment for processing waste fluid including a combustion means to burn liquid fuel in a burner, a fuel supply line for supplying fuel to the combustion means, and a fuel transfer means as well as a fuel flux control means both provided at the fuel supply line, the industrial combustion equipment includes: a waste fluid injection line which joins between the fuel flux control means of the fuel supply line and the combustion means; a waste flux control means provided at the waste fluid injection line; an injection ratio setting means that can set a target injection ratio for the waste fluid at any fuel flux; a proportionality control means to output a proportionality signal to the waste flux control means based on the target injection ratio set by the injection ratio setting means; and a pressure detection means provided at the exit side of the waste fluid flux control means of the waste injection line, or between the combustion means of the fuel supply line and the fuel flux control means, as well as a pressure correction means to output a correction signal to the proportionality control means based on a pressure signal sent from the pressure detection means; or alternatively, a differential pressure control means that keeps a differential pressure to be constant between the upstream and the downstream of the waste fluid flux control means.

Since it is industrial combustion equipment, it must response to changes in the amount of combustion as well. If the fuel flux into the combustion means, like a burner, changes, it is often the case that the pressure supplied to a burner also changes simultaneously. If the pressure before and after the waste fluid flux control means changes in the case of the general waste fluid flux control means, the actual flux changes by the same flux control signal, and it becomes difficult to maintain the accurate flux. Although it is possible to rectify these errors eventually by means of detecting waste fluid flux, with this control method, it may cause a temporary control delay and the excess and deficiency of waste fluid flux, and bring about the instability of combustion.

In the present invention, since it uses a pressure detection means which carries out a quick response to a flux detection means, it just needs to calculate the value which must be corrected in advance from difference in pressure between the before and after waste fluid control means, and then it can add a correction which is accurate and fast to the fuel control signal outputted to a waste fluid control means according to changes in pressure before the burner, and it can prevent the excess and deficiency of waste fluid. In addition, it can also expect the same effect even if a valve operating mechanism with a pressure differential adjustment function is built to keep the differential pressure of the before and after waste fluid flux control means constant. As mentioned above, even with the present invention, in cases when it mixes fuel and waste fluid, it can ensure waste fluid is processed efficiently, and it carries out the purpose of the present invention.

In the industrial combustion equipment for processing the waste fluid according to the present invention, it is preferable that: the waste fluid injection line includes a main waste fluid injection line for injecting a main waste fluid with a lower calorific value than that of the fuel, and a sub-waste fluid injection line for injecting a sub-waste fluid with the substantially same calorific value as that of the fuel; the main waste fluid injection line is provided to join the fuel supply line which is the upstream of the mixing means, or the mixing means; and the sub-waste fluid injection line is provided to join the fuel supply line which is the upstream of the fuel flux control means.

For example, at the time of the main waste fluid with a hydrophilic nature and the sub-waste fluid with a lyophilic nature are separately by-produced, if sub-waste fluid with which the calorific values for a lyophilic waste fluid and fuel are the same, is injected into the lower-stream of the fuel flux control means, it contrarily creates a problem easily whereby a heat calorie becomes excessive.

Then, in the present invention, since the injection point of sub-waste fluid is made into the upstream of the above-mentioned fuel flux control means and fuel and sub-waste fluid are controlled together in the fuel flux control means, the fault that a heat calorie becomes a subject does not occur, but concurrent processing of the main waste fluid and sub-waste fluid can be ensured in one set of industrial combustion equipment.

In the industrial combustion equipment for processing the waste fluid according to the present invention, it is preferable that: the waste fluid is emulsion solution made of the main waste fluid and the sub-waste fluid both of which have different affinities; and the waste fluid injection line includes an emulsion separation means to separate the emulsion solution into the main waste fluid and the sub-waste fluid, and the waste fluid injection line is divided into the main waste fluid injection line for injecting the main fluid and the sub-waste fluid injection line for injecting the sub-waste fluid at the downstream of the emulsion separation means.

Even when it seems to be stable, the emulsion solution in which the stability is impaired by leaving it untreated, having a mechanical and temperature changes, or being mixed with other waste fluid, then it generates the separation, the concentration difference, and the cream.. In this situation, it is difficult to process as it is no longer waste fluid with uniform calorific value, viscosity, etc.

Then, according to the present invention, since these emulsion solution is divided into the main waste fluid and the sub-waste fluid with which affinity differs such as waste water and waste oil, using an emulsion separation means, these main waste fluid and sub-waste fluid come to be injected into a fuel injection line as waste fluid with uniform calorific value, viscosity, etc. As such even for the emulsion solution, it can be processed certainly.

Here, as an emulsion separation means, it has a thing using the specific gravity of liquids which constitute emulsion, a method which makes separation easy by breaking the emulsion breaking protection function called a emulsion breaker, and a method of fractionating using the difference of steam pressure. A stationary method and a centrifugal separation machine are known for the things using a specific gravity difference, and the emulsion breaker is also known for the method of salting out, alcohol addition, and surface-active agent addition. Moreover, the method which separates every ingredient by fraction from heating is known for the thing using the difference of steam pressure.

According to the present invention, an industrial combustion equipment for processing waste fluid including a combustion means to burn liquid fuel in a burner, a fuel supply line for supplying fuel to the combustion means, a fuel transfer means as well as a fuel flux control means both provided at the fuel supply line, a waste fluid spray means to spray waste fluid to the burner, and a waste fluid injection line for injecting the waste fluid to the waste fluid spray means; the waste fluid is made of a main waste fluid and a sub-waste fluid which have different affinities and are the separately prepared; the waste fluid injection line includes a main waste fluid injection line for injecting the main waste fluid, and a sub-waste fluid (injection line) for injecting the sub-waste fluid; the main waste fluid injection line has a main waste fluid flux detection means to detect a main waste fluid flux, and an emulsification means to emulsify the main waste fluid and sub-waste fluid; the sub-waste fluid injection line is provided to join the main waste fluid injection line which is the upstream of the emulsification means, or the emulsification means; and the industrial combustion equipment includes: a sub-waste fluid flux detection means to detect the flux of the sub-waste fluid, a sub-waste fluid flux control means to control the flux of the sub-waste fluid, and a sub-waste transfer means to transfer the sub-waste fluid, each of which is provided at the sub-waste fluid injection line; and a sub-waste fluid proportionality control means to output a proportionality signal to the sub-waste fluid flux control means based on the flux signal of the main waste fluid flux detection means.

In an industrial combustion equipment with a traditional waste fluid incineration equipment, for instance, since it is mutually-immiscible due to the affinity difference like waste water and waste oil, the main waste fluid and sub-waste fluid which the mixed state which in a mixed state is loose, will be impossible to dispose at the same time.

However, in the present invention, since the sub-waste fluid is proportionally injected with the signal from a main waste fluid flux detection means prepared in the main waste fluid injection line, it becomes an emulsified state by an emulsification means, then supplies to the waste fluid spray means. Therefore, it is possible to process the sub-waste fluid and the main waste fluid simultaneously in the waste fluid incineration equipment, and the purpose of the present invention is attained.

Moreover, generally as the waste fluid like waste water and the sub-waste fluid like waste oil have a different calorific value, the main waste fluid has almost no quantity of heat but the sub-waste fluid has quantity of heat equivalent to fuel in many cases. Although the waste fluid incineration equipment adjusts the fuel flux in order to keep the temperature in the burner constant, if the heat quantity of waste fluid for processing is different, it naturally needs to have the fuel adjustment accordingly. However, since the control is generally for rectifying a slight change of heat quantity for the waste fluid, if the calorific value for waste fluid changes rapidly, it cannot make the control on time, and it become causes of the discharge of untreated waste due to a drop in combustion room temperature, and the damages on the wall of furnace.

On the other hand, according to the present invention, since emulsion waste fluid which is a combination of the main waste fluid and the sub-waste fluid that is proportionally injected into main waste fluid is formed just before the waste fluid spray means, and then is supplied into waste fluid spray means, it becomes emulsion waste fluid with stable calorific value, and it can also prevent a rapid change in heat quantity for waste fluid.

It is preferable that the industrial combustion equipment for processing the waste fluid according to the present invention further includes: an additive agent injection line that injects an additive agent into the fuel, the waste fluid or a mixed-solution of the fuel and the waste fluid; and an additive agent flux control means to control the flux of the additive agent based on a flux signal sent from any one of the three flux detection means, the fuel flux detection means, the waste fluid flux detection means, and the main waste fluid flux detection means.

When it blends liquids with a mutually-immiscible nature each other like water and oil, it carries out a stable emulsion state by adopting a mechanical emulsification means if the specific gravity difference of both liquids is small, or if viscosity of the liquid in continuous phase is high.

However if the separation speed is fast, as the specific gravity difference is large and viscosity of the liquid in continuous phase is low, etc., it is effective to drop the separation speed by using an additive agent such as a surface-active agent in order to stabilize the spray state into a burner. For this reason, in the waste processing to which a separation speed becomes a problem by using an additive agent like a surface-active agent, etc., the mixed condition of fuel or waste fluid with lyophilic nature (sub-waste fluid) against waste fluid with hydrophlic nature (main waste fluid) becomes favorable, and it carries out a stable combustion.

It is preferable that the industrial combustion equipment for processing the waste fluid according to the present invention further includes: a plurality of additive agent injection lines to inject an additive agent into the fuel, the waste fluid or a mixed-solution of the fuel and the waste fluid, in which each of the additive agent injection lines is provided to be able to inject the additive agents respectively having different characteristics.

Since an additive agent depending on the character and the expected performance can expect the effects by which it may as well add into the fuel, conversely by which it may as well add into the side that is injected in like waste fluid, and by which it may as well add simultaneously into both, it is useful to change the type and the addition method of an additive agent according to the type of waste fluid.

Then, in the present invention, since it has a plurality of additive agent injection lines, it leaves out exchanging additive agents according to the waste fluid type when using a multi-usage additive agent, it can easily respond by a manual operation like a switch, etc., and an automatic control like a sensor, etc.

In the industrial combustion equipment for processing the waste fluid according to the present invention, it is preferable that the waste fluid injection line has a salts concentration reduction means to lower the salts concentration of waste fluid.

There are some waste fluid generated by a mixture of organic waste fluid and inorganic system waste fluid. As for the industrial combustion equipment which is covered by the present invention, there is no defense means against deposition of halogen or ash unlike an incinerator, and if these are mixed into the equipment, it may cause harmful influences, such as shortening of an equipment life and decline in heat exchange ratio, etc.

Then, in the present invention, since an inorganic acid and base in waste fluid are desalted by a salt dilution means, and the waste fluid what becomes a desalination waste fluid which has an increase in the organic waste fluid ingredient is processed in industrial combustion equipment, it can prevent the shortening of equipment life or of heat exchange efficiency.

In the industrial combustion equipment for processing the waste fluid according to the present invention, it is preferable that the waste fluid injection line has a waste fluid miller means to disperse a gelled solid in the waste fluid into the waste fluid.

Although waste fluid is a perfect liquefied substance in many cases, it may contain a gelled solid from the reaction of each ingredient or the character of waste fluid in some cases.

In the present invention, since the miller means is to disperse a gelled solid into waste fluid and it becomes liquefied, waste fluid including the gelled solid also comes to be processed and its processing efficiency of waste fluid improves.

It is preferable that the industrial combustion equipment for processing the waste fluid according to the present invention further includes a slurry means for forming into slurry a carbide discharged from a activated carbon which has adsorbed an organic compound, or a carbonization processing means.

In various kinds of manufacturing processes, medical and research organizations, etc., an activated carbon is used as a means to carry out an absorptive removal of organic system compounds. However, although the activated carbon needs to be regenerated once the absorption finishes, it requires huge electrical energy for regeneration and considerable equipment costs.

Then, according to the present invention, since carbide, such as activated carbon, is formed into slurry by the slurry means, the carbide where a landfill disposal was performed traditionally as a waste product becomes to be certainly and cheaply disposed.

It is preferable that the industrial combustion equipment for processing the waste fluid according to the present invention further includes any one of means such as a sterilization means to sterilize harmful bacteria which exist in the waste fluid, a bacteria elimination means to eliminate bacteria, a control means to control multiplication of the harmful bacteria, an interception means to intercept the harmful bacteria to be mixed into the waste fluid and a useful bacteria multiplication means to multiply useful bacteria which promote combustion of the waste fluid.

Depending on the type of waste fluid, it may decompose during primary storage, and this may be accompanied by change, such as generating bad smell, sludge, or methane gas etc., which is not desirable on a processing operation.

In the present invention, it is possible to prevent a harmful effect accompanied by the decomposition phenomenon of the waste fluid by applying a suitable sterilization means for the waste fluid which is the processing objective.

A waste fluid processing method using an industrial combustion equipment includes the step of processing waste fluid with the use of the industrial combustion equipment according to the present invention.

In the present invention, as mentioned above, the operation effect in each claim is acquired similarly, and the purpose of the present invention is attained.

In the waste fluid processing method according to the present invention using the industrial combustion equipment, it is preferable that the waste fluid processing method uses as an additive agent a combination of a plurality of surface-active agents with which composition of either a hydrophile-lipophile balance, a lyophilic group or a hydrophilic group differs, when injecting the additive agent into the fuel, the waste fluid, or a mixed solution of the fuel and the waste fluid.

For waste fluid where the processing objective is not fixed, it has many cases where the hydrophile-lipophile balance (HLB), lyophilic group, and hydrophilic group of the surface-active agent which is the most appropriate for the waste fluid that is to be emulsified, differ from each other. Although a surface-active agent has difficulty in fulfilling its function if the character does not match it including HLB, the surface-active function improves sharply if the ingredient which matches even a little exists. If it uses the emulsion state of waste fluid (main waste fluid) and fuel, or the emulsion state of waste fluid where affinity differs (main waste fluid and sub-waste fluid), as the time from after mixing to burning in the burner is short in general, it attains the purpose if an emulsion state can be maintained within this time, and it is possible to response with the same additive agent for two or more waste fluid with which the composition is not fixed by using a surface-active agent which is adjusted to disperse the character and value of HLB, a lyophilic group or a hydrophilic group.

In the waste fluid processing method according to the present invention using the industrial combustion equipment, it is preferable that the waste fluid processing method uses a viscosity thickener as an additive agent to increase the viscosity of the fuel and/or the waste fluid when injecting the additive agent into the fuel, the waste fluid or the mixed-solution of the fuel and the waste fluid.

With emulsion solution, if the viscosity of liquid solution which becomes a continuous phase increases, it is known that the movement of emulsified particle is disturbed and the separation speed falls.

Therefore, according to the present invention, since emulsion stabilization has a characteristic that it is hardly dependent on the HLB value of the injected side of liquid, or the lyophilic or hydrophilic group nature, it is also suitable for waste fluid which is not fixed too, and an emulsion state is maintained.

In the waste fluid processing method according to the present invention using the industrial combustion equipment, it is preferable that the waste fluid processing method uses a lubricant with a characteristic which improves the lubricity of the fuel and/or the waste fluid as an additive agent, when injecting the additive agent into the fuel, the waste fluid or the mixed-solution of the fuel and the waste fluid.

In the waste fluid processing method according to the present invention using the industrial combustion equipment, it is preferable that the waste fluid processing method uses an anticorrosive with a characteristic which improves the corrosive protection nature of the fuel and/or the waste fluid as an additive agent, when injecting the additive agent into the fuel, the waste fluid or the mixed-solution of the fuel and the waste fluid.

In the industrial combustion equipment, there are some things which require to have a complicated combustion mechanism and a high accuracy control. In such equipment, if non-lubricative water in waste fluid and a high volatile ingredient are mixed into fuel, it generates a sticking from lubricating problem and abrasion or corrosion problems in the fuel supply line, the fuel transfer means, the fuel control means, the combustion means, etc., then it causes a serious trouble in the operation.

In the present invention, since an oiliness improvement agent, a lubricant and an extreme pressure additive agent which improve the lubricity of the mixed-solution, and an anti rust agent which prevents the metal from corrosion are added into fuel or waste fluid, it is possible to prevent failures caused by the waste fluid addition in the industrial combustion equipment. Especially, if the additive agent which contains alkaline-earth metals etc. is used, it will be also useful to reduce the corrosion in the furnace by halogen or phosphorus.

It is preferable that the waste fluid processing method according to the present invention using the industrial combustion equipment further includes the step of determining an acceptable injection ratio in the case of the lubricant agent mainly used for the purpose of lubrication, as the waste fluid by using a combustion safety evaluation means.

In the conventional lubricant agent, in order to improve mainly the lubricity, the heat stability, etc., which are the original purpose, it tries to improve the performance by adding various additive agents. However, in the present situation where a recycling-oriented economy is called for, there is a tendency to avoid mixing substances used only for the performance gain but difficult to recycle.

In the present invention, although the exchange frequency of industrial lubrication oil rises due to a slight fall in performance, while using a lubricant with which additive agent containing a little or no ash content and halogen are mixed, and using a method comparatively simple such as a method which can carry out the separation removal of ingredients which cause a combustion failure or a harmful effect to the exhaust gas, etc., the disposal becomes easier with this waste fluid mixing equipment or this processing method, and it becomes favorable for the total cost of the waste treatment fee, the industrial combustion equipment efficiency, the equipment life, etc.

Here, the definition of ash content is a substance in which a quantity is determined by the ash content analysis which is "the ash content of crude oil and an oil product, and the sulfuric acid ash examination method" of JISK2272. Among these, especially, as the metal ingredient of low melting point becomes a problem, it is desirable, as the offering details, to carry out every each metal ingredient which constitutes ash content.

Halogen is elements, such as F, Cl, Br, I, etc. belonging to the halogen family in the atomic periodic table. Since this ingredient has the action in which it deviates under high temperature then causes the corrosion of steel materials directly, and it also becomes a cause of a dioxin generation in terms of Cl, it is desirable if it does not contain halogen as much as possible.

Phosphorus is used as phosphoric acid ester, and mainly as zincky substitution for the lubricative grant.

Since ash contents in general form ashes by heating to775 degrees centigrade, and it is a substance which does not produce either evaporation or vaporization, it remains in the heating surface or finished goods, and it causes a harmful effect, such as an inhibition of heat transfer, a deterioration of product quality. Salt stable in normal temperature also deviates with sodium in the state of high temperature, and serves as stand-alone halogen. Since the deviated halogen forms a halogenation compound by reacting directly with the calcium oxide and magnesium oxide which are used as a metal or a fire refractory material under the high temperature, it promotes the corrosion and degradation. Phosphorus has the character to react with steel materials in a molten state and to make it deteriorate.

However, if the above-mentioned ash, halogen or phosphorus ingredient is comparatively little, it will not become a practical obstacle for the industrial combustion equipment used in the present invention.

**Brief Description of Drawings**

Fig. 1 is a diagram showing the first embodiment of the present invention;
Fig. 2 is a diagram showing the polygonal line multi-stage injection ratio setting machine used with the above-mentioned first embodiment;
Fig. 3 is a diagram showing multi-stage multi-point injection ratio setting machine used with the above-mentioned first embodiment;
Fig. 4 is a diagram showing the mechanical multi-point injection ratio setting system used with the above-mentioned first embodiment;
Fig. 5 is a graph showing an example of the control result for the main waste fluid injection ratio with the above-mentioned polygonal line multi-point injection ratio setting machine;
Fig. 6 is a graph showing the case where the above-mentioned polygonal line multi-point injection ratio setting machine is made into a two-point type;
Fig. 7 is a graph showing an example of the setting pattern of sub-waste fluid injection ratio with the above-mentioned polygonal line multi-point injection ratio setting machine in the case of injecting the waste oil of the industrial lubricating oil as sub-waste fluid;
Fig. 8 is a graph showing an example of the control result of the main waste fluid injection ratio with the above-mentioned multi-stage multi-point injection ratio setting machine;
Fig. 9 is a enlarged diagram showing the principal part of the above-mentioned 1 st embodiment;
Fig. 10 is a diagram showing the second embodiment of the present invention;
Fig. 11 is a diagram showing the third embodiment of the present invention;
Fig. 12 is a diagram showing the modification of the salts reduction means in the above-mentioned third embodiment;
Fig. 13 is a diagram showing the modification of the above-mentioned salts reduction means;
Fig. 14 is a diagram showing the modification of the above-mentioned salts reduction means;
Fig. 15 is a diagram showing the modification of the above-mentioned salts reduction means;
Fig. 16 is a diagram showing the modification of the above-mentioned salts reduction means;
Fig. 17 is a diagram showing the fourth embodiment of the present invention;
Fig. 18 is a diagram showing the fifth embodiment of the present invention;
Fig. 19 is a diagram showing the 6th embodiment of the present invention;
Fig. 20 is a diagram showing the above-mentioned sixth embodiment as a whole;
Fig. 21 is a diagram showing the seventh embodiment of the present invention;

Fig. 22 is a diagram showing the above-mentioned seventh embodiment as a whole;

Fig. 23 is a diagram showing the prior art; and

Fig. 24 is a diagram showing the prior art.

**Best mode for Carrying out the Invention**

Each of embodiments in the present invention is described below with reference to the related drawings.

[First Embodiment]

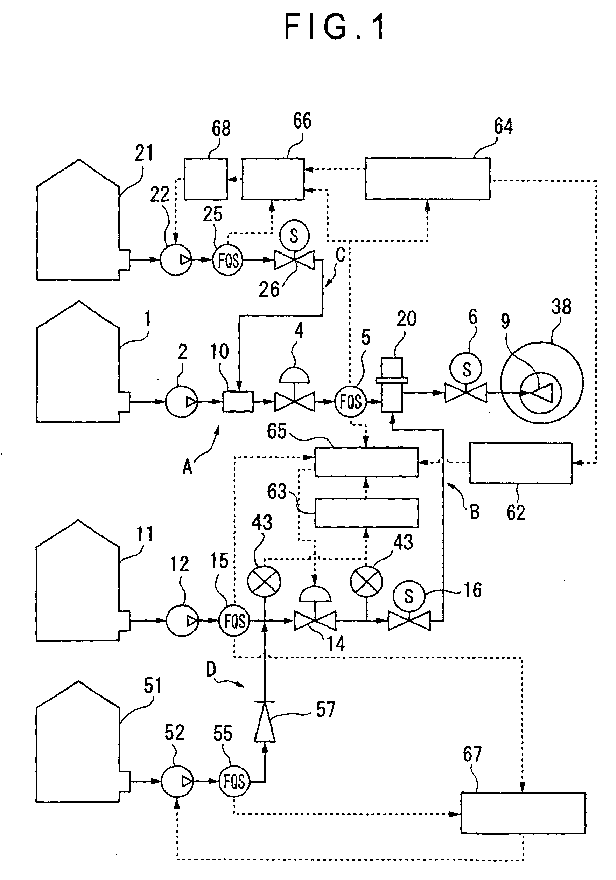

The first embodiment of the present invention is described below with drawings. Fig. 1 is a block diagram of a boiler (industrial combustion equipment) with a proportional expression combustion mechanism of the liquid fuel concerned in the present invention. Moreover, in Fig.1, the same marks are given to show the composition which is the same composition as explained in Fig 23 and Fig 24, or has the same function.

In this type of boilers, waste water (the main waste fluid) and waste oil (sub-waste fluid) are injected in the fuel supply line A through the main waste fluid injection line B and the sub-waste fluid injection line C. Furthermore, it is configured to inject an additive agent into the main waste fluid injection line B through the additive agent injection line D.

The fuel flux meter (fuel flux detection means) 5 which is a means to measure the amount of supply fuel to a boiler is deployed at the lower-stream side than the mixer (mixing means) 10 for mixing waste oil, and the upper-stream side than the mixer (another mixing means) 20 for emulsifying waste water.

In the present embodiment, the waste oil stored in the sub-waste fluid tank 21 has about the same calorific value as fuel, and can easily mix with fuel.

The sub-waste fluid pump 22 consists of pumps with which the discharge amount per rotation is fixed like a gear type pump, and the sub-waste fluid flux meter (waste fluid flux detection means) 25 which is a means to detect the flux of waste oil is arranged on the sub-waste fluid pouring line C.

For this sub-waste fluid flux meter, constitutionally there is no problem having it either where the upstream side or the lower-stream side is. The sub-waste fluid proportionality controller (proportionality control means) 66 is equipped with the function to control the output frequency of VVVF device which can change the rotation speed of a motor, and by controlling the rotation speed of the motor in the sub-waste fluid pump 22, the sub-waste fluid pump 22 serves both as the waste oil side of the waste fluid transfer means and the waste fluid flux control means.

Although the sub-waste fluid injection line C joins fuel in the mixing machine 10 in the present embodiment, it has no problem even if it joins by the upstream side of the mixing machine 10 in the fuel supply line A.

As in the present embodiment, in the case of the liquids which can easily be mixed to each other, the mixing machine 10 can be substituted as a simple thing which can prevent inhomogeneous fluid. Also there is no problem to substitute it to a thing like the mixer 20 mentioned later that applies shearing force into liquid and performs churning and dispersion.

Although the sub-waste fluid interception valve 26 is constitutionally not important, it is deployed for preventing the backflow of fuel if the waste oil injection is stopped, and not to have accidental injection at the time of the test operation of sub-waste fluid pump 22.

In the case of the present embodiment, the waste water stored in the main waste fluid tank 11 is equivalent to the waste water which the calorific value is extremely low.

With the main waste fluid pump (another waste fluid transfer means) 12, the discharge pressure is almost fixed regardless of the flux in the multi turbine type pump. Although not shown in the figure, if the discharged flux is little, it is common to set a minimum flow line and return a certain amount to the main waste fluid tank 11 in order to prevent heating in the inside of the main waste fluid pump 12.

The main waste fluid flux meter (another waste fluid flux detection means) 15 is deployed at the lower-stream side than the minimum flow line, and is arranged where it does not measure the minimum flow.

Although the main waste fluid flux adjustment valve (another waste fluid flux control means) 14 is controlled by a signal from the fuel flux meter 5 at the main waste fluid proportionality controller based on the setting ratio signal which goes via the target ratio changing time controller 62, a signal of the pressure difference compensation operation machine (pressure compensation means) 63, which calculates a compensation signal from the pressure signal of the pressure dispatch machine (pressure detection means) 43 prepared before or behind the main waste fluid flux adjustment valve 14, is also compounded at the above-mentioned main waste fluid proportionality controller 65.

Although the pressure dispatch machine 43 is usually placed before or behind the main waste fluid flux adjustment valve 14 as shown is Fig 1, it can be omitted if the exit pressure of the main waste fluid pump 12 stays constant. In the present embodiment, the waste water is supplied to the mixer 20, and it forms emulsion with fuel (included waste oil).

**EP 1 479 971 A1**

The function of the main waste fluid interception valve 16 is the same as that of the above-mentioned sub-waste fluid interception valve 26.

Here, it gives a general rundown on the mixer 20. A mixer is generally divided roughly into a rotation shearing type, a fluid pressure shearing type, and an ultrasonic vibration type.

A rotation shearing type applies the mechanical shearing power acquired by the motor etc., and disperses the injection liquid into the liquid to be injected. The configuration of the part applying the shearing power is varied by the usage such as what agitates a liquid like a propeller, what makes shearing power act on a liquid by rotating one of two disks while passing fluid through the crevice between the disks which it counters, etc.

A fluid pressure shearing type has the following applications what applies the shearing power by applying high pressure to the mixture of the injection liquid and the liquid to be injected, and making it inject from a thin nozzle, and the shearing power by using the turbulent flow phenomenon operated under the constant flow velocity, etc.

An ultrasonic shearing type *(Translator's comment: An ultrasonic vibration type)* makes an ultrasonic vibrator worked on the inside of the mixed-solution, and makes the liquid emulsified by the cavitation phenomenon generated on the vibrator surface.

The additive agent stored in the additive agent tank 51 joins the main waste fluid injection line B via the additive agent pump 52, the additive agent flux meter 55, and the additive agent check valve 57.

With the present embodiment, the electromagnetic pulse driven diaphragm pump is being used for the additive agent pump 52, and since it can control the discharge amount according to the number of pulses outputted from the additive agent proportionality controller 67, it serves as the additive agent transfer means and as a part of the additive agent flux control means. The confirmation whether the additive agent is actually being injected can be performed in the additive agent flux meter 55.

Although the additive agents check valve 57 is not important constitutionally, it can prevent the backflow of an additive agent.

An outline of a boiler was given in the above, and the details are described further as below.

First, the boiler is equipped with the multi-point injection ratio setting machine (injection ratio setting means) 64 which outputs a setting ratio signal to the target ratio changing time controller 62 and the sub-waste fluid proportionality controller 66. The polygonal line type multi-point injection ratio setting machine, the multi-stage type multi-point injection ratio setting machine, and the mechanical multi-point injection ratio setting equipment, etc., are used as the multi-point injection ratio setting machine 64.

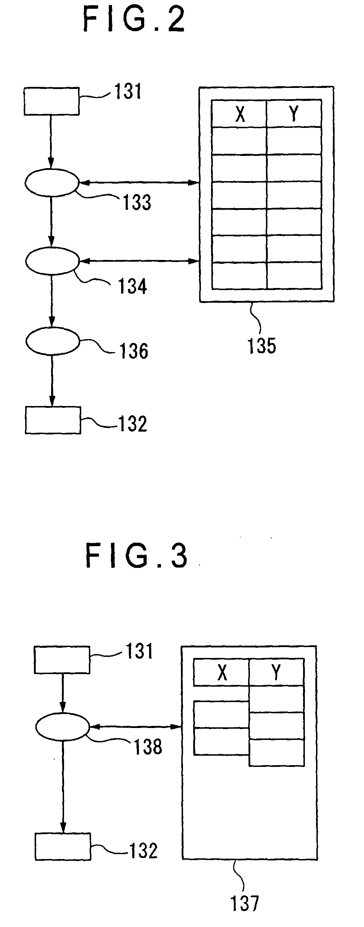

In Fig. 2, the composition example of the polygonal line type multi-point injection ratio setting machine is shown. In this kind of composition, it first carries out the lower limit matching retrieval processing 133 with the value of the fuel flux signal 131, and retrieves X1 which is the largest value but does not exceed the fuel flux value in the setting value parameter table 135, and the setting value Y1 corresponding to it. Next, it reads out X2 which is the smallest value that exceeds or equals the fuel flux value in the setting parameter table 135.

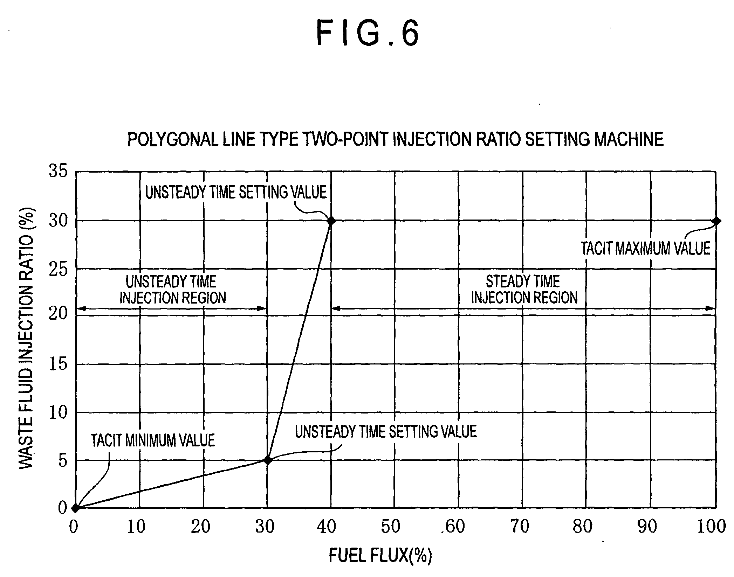

Using the above-mentioned X1, Y1, and X2, Y2, the target ratio is determined by performing the calculation of the formula below in the function processing 136. Generally, it makes the characteristic as shown in Table 1 using two or more XY parameter pairs, but if using two of XY parameter pairs, the characteristic as shown in Fig. 6 can be brought about by adding a tacit parameter like X= 0, Y= 0 and, X= 100, Y=Max (Y).

[Formula 1]

$$\text{Target Ingection Ratio} = \frac{(Y2 - Y1) \times (\text{Fuel Flux} - X1)}{X2 - X1} + Y1$$

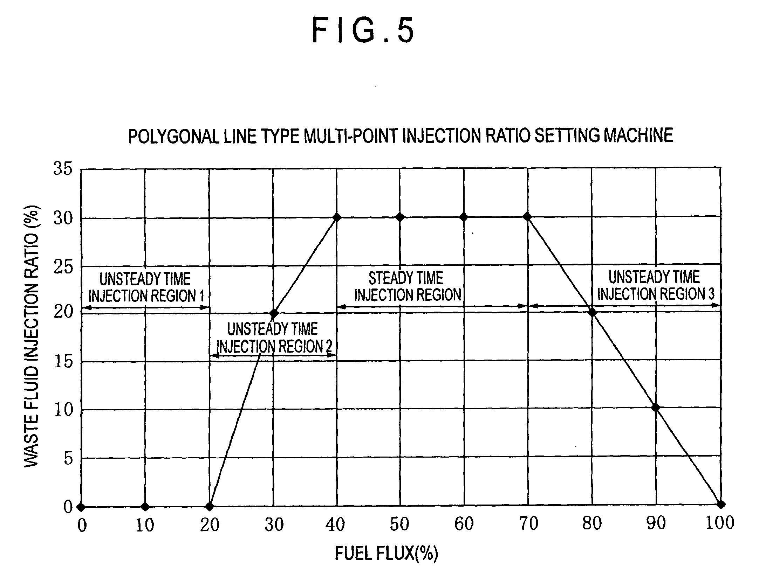

Here, Fig. 5 is an example for the control result of the main waste fluid injection ratio by the polygonal line type multi-point injection ratio setting machine. That is, at the unsteady time injection region 1, it stops injecting the main waste fluid in order to prevent the discharge of the untreated waste associated with a decrease in the burner temperature, and the spray performance deterioration of the burner 9. At the unsteady time injection region 2, it becomes the injection ratio corresponding to a decrease of the maximum processing capability ratio caused by the decreasing of the burner temperature. At the steady time injection region, it is the region that brings out the maximum processing capacity for the boiler, and is also the most frequently-used region in the general boiler load. At the unsteady time injecting region 3, it is a region that avoids the spray capability of the burner 9 which exceeds the rated spray capability, and a decrease in the injection ratio of the main waste fluid is made. In addition, if the exhaust gas flow velocity becomes too fast, it stops injecting the main waste fluid in order to prevent the generation of the untreated waste by shortening the holding time in the burner 18.

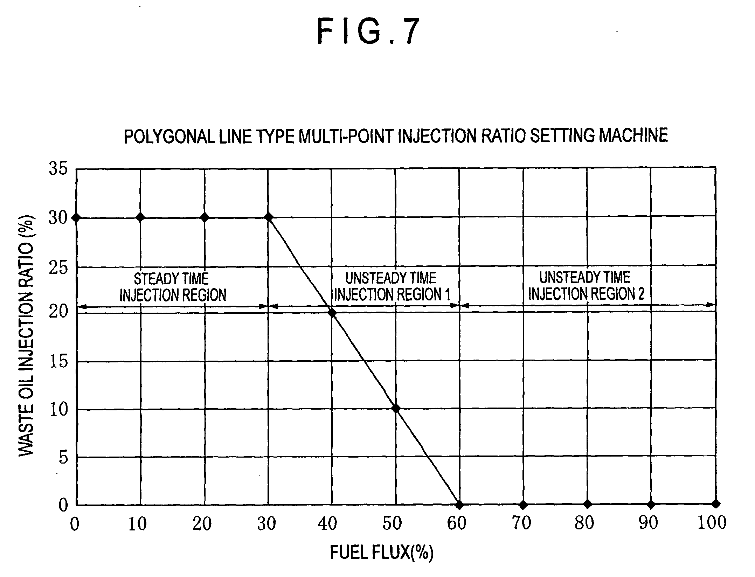

Fig. 7 is an example of the sub-waste fluid injection ratio setting pattern with the polygonal line type multi-point injection ratio setting machine in the case of injecting the waste oil of industrial lubrication oil as sub-waste fluid. Since the industrial lubrication oil contains the ash ingredient with low melting point, the melted ash may adhere to heating surface and failures may occur if the burner temperature goes up too high. However, since there is no substance which becomes the generating factor of dioxin like a chloride in the industrial lubricating oil, the low combustion region turns into the steady time injecting region in this case, and it can prevent the failures from the sub-waste fluid combustion by lowering the injection ratio in accordance to the high temperature in the burner at the unsteady time injection region 1, and making a complete stop to the main waste fluid injection at the unsteady time injection region 2.

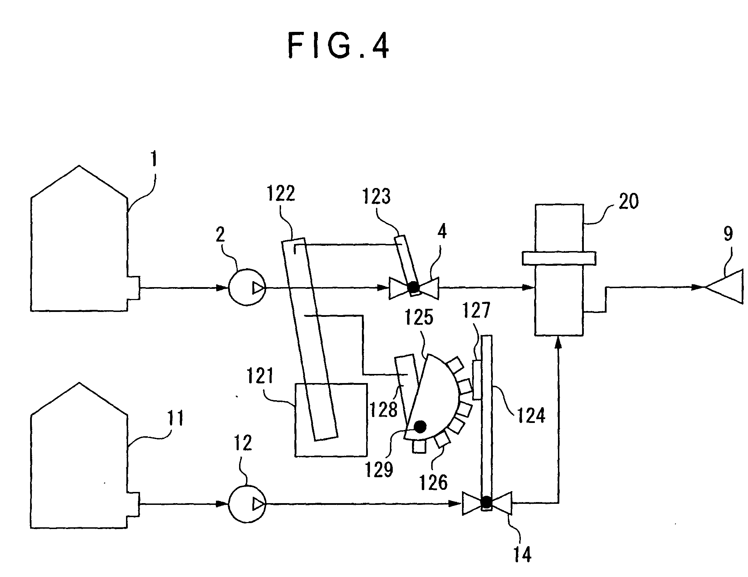

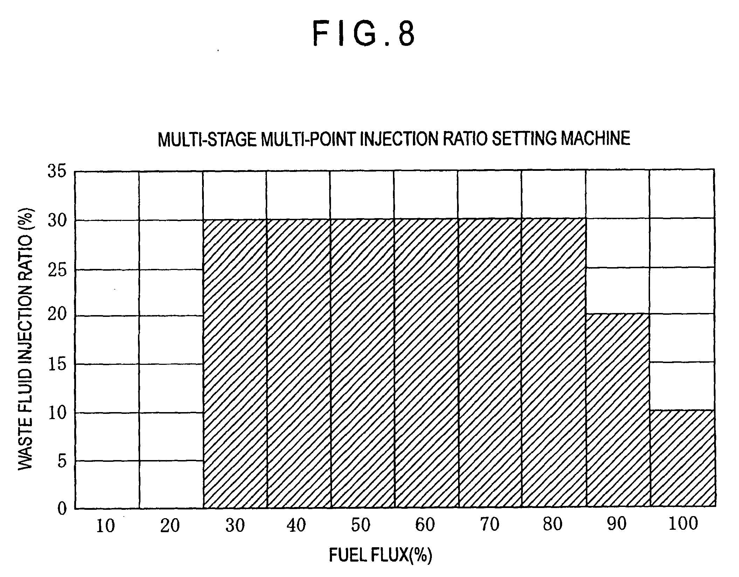

Back to Fig. 3, this figure shows the example for the composition of the multi-stage type multi-point injection ratio setting machine which reads the injection ratio of the main waste fluid or the sub-waste fluid against the amount of combustion as it is. However, in this kind of composition, since the injection ratio changes like a step shape in Fig 8, it is important to use the target ratio changing time controller 62 as in the composition, etc., and to ensure that rapid changes in the injection ratio does not take place at a boundary point.

Fig 4 shows the example for the composition of the mechanical multi-point injection ratio setting equipment. Although the polygonal line type multi-point injection ratio setting machine and multi-stage type multi-point injection ratio setting machine explained above are like the electronic control which goes to read a value according to the fuel amount by performing the calculation from the polygonal line approximation function or arranging the value on the table, the mechanical multi-point injection ratio setting equipment is a mechanical type equipment with which the fuel flux detection means, the multi-point injection ratio setting means, the proportionality control means are actualized by the cam or the link .The main arm 122 which transmits the rotation angle of the controlling actuator 121 is connected here, and the fuel control valve arm 123 which controls the opening of the fuel flux adjustment valve 4, and the drum turning arm 128 which controls the rotation angle of the cam drum 125 are connected in the main arm 122. In the cam drum 125, since a height-adjustable bolt which is called the cam bolt 126 is buried on its circumference, the positional relationship between its top part and the cam face board 127 determines the angle of the waste fluid control valve arm 124, and the main waste fluid flux adjustment valve 14 is controlled.

In the case of this mechanical multi-point injection ratio setting equipment, this part constitutes the fuel flux detection means in order for the main arm 122 to rotate the cam drum 125 synchronizing with a fuel adjustment valve. Also since the rotation center 129 of the cam drum 125 is deflected, the main waste fluid proportionality control means is constituted in order for this part to proportionally control the opening of the waste fluid control valve arm automatically according to the rotation of the main arm. And since each cam bolt 126 can determine the injection ratio at the time, it constitutes the multi-point injection ratio setting means. Although this sort of composition is not shown graphically, it is also applicable to the sub-waste fluid.

In addition, as long as it has sufficient function to detect the fuel flux or the waste fluid flux for the valve opening of the fuel adjustment valve and the valve opening of the waste fluid adjustment valve, it may use the two opening information concerned as a means to manage the injection ratio for waste fluid, and may independently install the measurement equipment such as a flux meter, etc.

Next, it explains about the main waste fluid proportionality controller 65, the sub-waste fluid proportionality controller 66, and the additive agent proportionality controller 67 in the present embodiment, respectively. Each proportionality controllers 65, 66, and 67 are for injecting the flux of the main waste fluid on the fuel flux, the flux of the sub-waste fluid on the fuel flux, and the flux of an additive agent on the flux of the sub-waste fluid with a predetermined ratio respectively. And they are means to output proportionality signals of the pulse train etc., in order to control the valve opening for the main waste fluid adjustment valve 14, or to control the rotation speed of the sub-waste fluid pimp 22 and the additive agent pump 52.

The methods for realizing this kind of control are generally known the open loop control, the closed loop control, the semi-closed loop control that is intermediate between those two, and the multi-element control which has two or more compensation elements. Each control is described below.

Open loop control is the simplest control and is realized at the additive agent proportionality controller 67 in the present embodiment. That is, it is high in the quantitative nature of the additive agent pump 52, and it is useful as an application which does not cause serious influences on the whole system in order to enable a reduction in the cost even in the case that it does not perform injecting, or it injects abnormally large amount.

Specifically it is realized by outputting the pulse train to the additive agent pump 52 according to the flux signal from the main waste fluid meter 15, and according to the additive agents ratio set in the additive agent proportionality controller 67. For example, in the case of the main waste fluid flux meter 15 which is the pulse output type and is 1L (liter) per pulse, if it uses a pump which has 10cc per pulse of the discharge capability as the additive agent pump 52, it just needs to output the pulse from the main waste fluid flux meter 15 to the additive agents pump 52 as it is when performing the additive agent 1% proportionality injection. If it is 10%, it just needs to output 10 times of pulse in the main waste fluid flux meter 15, and make it 1/10 output if it is 0.1%. Therefore, the additive agent flux control means in this case consists of each part of functions in the main waste fluid flux meter 15, the additive agent pump 52, and the additive agent proportionality controller 67, respectively.

In the present embodiment, the closed loop control is applied to the main waste fluid proportionality controller 65 and the sub-waste fluid proportionality controller 66.

Specifically, the target injection ratio (SV%) recognized by each proportionality controllers 65 and 66, and the target injection amount (SV) provided by the flux signal calculation of the fuel from the fuel flux meter 5 are determined by the proportionality controllers 65 and 66. Next, the proportionality controllers 65 and 66 generate proportionality signals (MV) to send to the sub-waste fluid pump 22 combined with the main waste fluid flux adjustment valve 14 and the VVVF device 68.

MV in the waste fluid control has the common technique for determining the theoretical MV value in a certain SV value with the function which makes the value that determines the fixed viscosity called the CV value in the adjustment valve, the differential pressure before/after the valve under specific gravity, and the control flux for the valve opening, as a parameter. At this time, if it is only outputting the value where the viscosity, the gravity, and the differential pressure before/after the valve are calculated as a fixed value into the main waste fluid flux adjustment valve 14, this control method is the open loop control.

However, in general, since accuracy is not so high for the above-mentioned MV (it is for the reason that disturbance elements, such as the viscosity, the specific gravity, and the differential pressure before/after the valve, are added in the case of actual application), it needs to perform the appropriate rectification for MV value comparing the signal (PV) from the main and sub-waste fluid flux meter 15, 25 with the SV. For example, if the value of PV is low as compared with SV, it rectifies by raising the MV (enlarging the valve opening). As the way to perform this rectification, it is generally realized by the technique called PID control in many cases. Thus, the control method which rectifies the value of MV by the deviation of PV and SV is the closed loop control.

Next, it explains about the semi closed loop control. For MV in the sub-waste fluid control, since theoretical discharge amount per rotation in the sub-waste fluid pump 22 is known, theoretical discharge amount per hertz is determined easily. Therefore, if SV is known, MV can be determined easily, and also its characteristic is linear and is easy to control.

In this case, although the above-mentioned close loop control is performed when a signal from the flux detection means of the liquid discharged by itself can be trusted, the signal cannot be trusted as it becomes outside of the measurement range when control flux falls too much. Therefore, the flux control that is reliable to some extent (rather than it feeds back the flux detection means) can be realized even in below the lower limits of the flux detection means, by performing the same control as an open loop, and performing a closed loop with high accuracy within the measurement limits of the flux detection means. Thus, the control method which is automatically changed to an open loop without a forced feedback control if a feedback means becomes the state where it is not reliable, is called a semi closed control.

Next, it explains about the multi-element control. For the semi closed control as well as the closed loop control, if both the former pressure of the waste fluid and the pressure at the injection point are the same, it can perform a follow-up control even for the application where it requires a certain level of responsiveness. However, at the time of the pressure change according to a load like a common combustion chamber, if it tries to achieve the flux change associated with this pressure change using a feedback from the flux meter, the stability becomes difficult to keep and the controllability becomes worse. In such a case, by preparing the compensation table which expects the pressure difference before and after a flux control means beforehand and performing the flux proportionality based on the value of the compensation table according to the pressure difference, as for the PID operation, it becomes the same as the case where the former pressure and the pressure of the injection point do not change, and the controllability becomes improved. A case like this where the compensation is carried out by detecting the pressure difference is called a multi-element control and it is prepared for improving the responsiveness of the PID operation. It is commonly used for the combination of a fuzzy control and PID control etc.

In the following, it describes more specifically about the injection control of the main waste fluid and sub-waste fluid using the main waste fluid proportionality controller 65 and the sub-waste fluid proportionality controller 66 in the present embodiment.

The amount of fuel supplied to the boiler is detected at the fuel flux meter 5 and is sent to the multi-point injection ratio setting machine 64. The injection ratio for the main waste fluid and the sub-waste fluid selected by the passing flux of the fuel is stored beforehand in the multi-point injection ratio setting machine 64. And if a boiler approaches near the minimum combustion with a signal from the fuel flux meter 5, in order to prepare for the outage of the boiler and to prevent the untreated fluid generation due to the temperature drop in the burner, it determines a lower injection ratio or a ratio where it is to terminate the injection. Moreover, if it becomes more than the fixed combustion amount, the maximum ratio which can be safely processed by the system is determined to be an arbitrary ratio as a limit. Furthermore, since the rated spray amount which can spray in the burner 9 at the time of the maximum combustion is defined for the boiler in general, it will cause a problem if it sprays exceeding the amount. Since the main waste fluid in this composition has almost no heat quantity, it is added to fuel and sprayed from the burner 9. That is, at the time of the maximum combustion, the sum total of the maximum combustion amount + the main waste fluid addition is sprayed from the burner 9. Therefore, it is also possible to determine the ratio which decreases or stops the injection ratio conversely in the near maximum combustion. In addition, in the case of the sub-waste fluid in this composition, since it has the same heat quantity as the fuel and is injected just before the fuel flux adjustment valve 4, it does not spray more than the maximum combustion amount, and it has few meanings of such a measure.

In addition, generally becoming near the minimum combustion is that shows the steam pressure power which is the controlling objective of the boiler concerned is high., and although the probability of the boiler termination becomes high as a result, the termination is not necessarily performed definitely. Also if the boiler concerned has joined under the group management called a number control operation, a boiler to be burned is determined from the total steam amount generated by the number of boilers, and it does not mean to stop after reaching the minimum combustion. Therefore, if it is difficult to predict the termination like this, it is also required to determine an injection stop ratio with a stop prediction signal detected from a steam pressure detection means, a production equipment, etc., or a stop warning signal from a number control system which controls the number control operation concerned. The important things at this point are that there is more than a little the piping capacity existing in the line from the injection point of the waste fluid to the burner 9, and there is the waste fluid remaining in the line after mixing even though the waste fluid injection is stopped simultaneously with the combustion. Therefore, it is necessary to secure the sufficient prediction time in order to prevent the waste fluid residuals, or to determine that the untreated waste fluid does not cause a harmful effect at the time of termination or re-ignition.

The main waste fluid ratio determined with the multi-point injection rate setting machine 64 is sent to the target ratio change time controller 62 together with the fuel flux signal. The target ratio change time controller 62 is that controls the timing for changing the injection ratio according to the capacity of the fuel supply line A between the main waste fluid injection point which was set in advance and the tip of the burner 9.

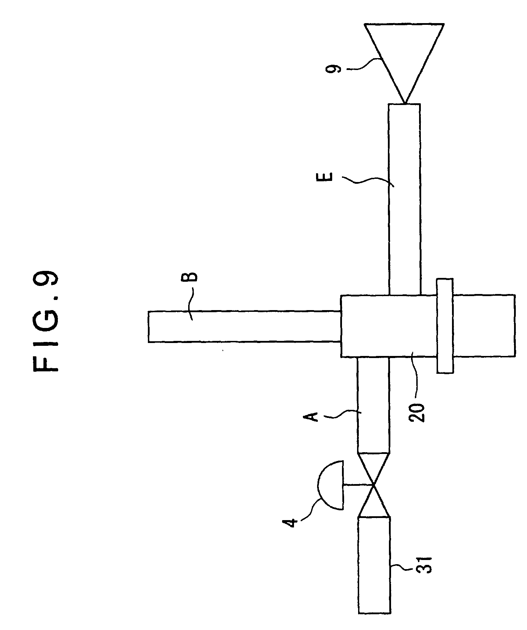

Here, with Fig 9, it reconfirms the explanation why this sort of control is required. The fuel flux of the fuel supply line A shall be controlled by the fuel flux adjustment valve 4 by a certain fixed flux. Suppose the fuel flux at this time is 100 temporarily. When it is going to add 20% ratio of waste fluid here, it makes the flux of 20 be supplied into the main waste fluid injection line B. These two liquids are uniformly mixed by the mixer 20, and it is supplied to a burner 9 through the mixed line E, and then flux of 120 is sprayed from a burner 9 as the sum total flux. However, with the injection starting point, the liquid which exists in the mixed line E and the burner 9 is fuel only, not a mixed-solution. Therefore, it sprays the fuel with the flux of 120 from burner 9 at this point. Since the main waste fluid has almost no calorific value as mentioned above, although the heat quantity for the fuel controlled by the fuel flux adjustment valve 4 and the mixed-solution sprayed from the burner 9 becomes equal in the regular state, in this kind of transitional situation, it arises the phenomenon which becomes unmatched. Especially like a boiler, in the case of the combustion equipment which precisely controls the fuel and the air amount required for the combustion, it becomes a cause of the incomplete combustion as it brings a shortage of oxygen from a temporary excess spray of the fuel. On the other hand, under the situation where the combustion amount 100 and the waste fluid amount 20 is balanced in the burner spray amount 120, assuming the situation where 20 of the waste fluid amount is made a sharp drop to zero, although the mixed-solution sprayed from the burner 9 falls to 100, the actual fuel which has the heat quantity is reduced to 83 as about 17 out of 100 of the waste fluid has no quantity of the heat. As this turns into an excessive air conversely and may cause an incomplete combustion, if this kind of situation arises at the low combustion where the combustion is primarily unstable, the combustion may become more unstable and may cause a flame failure phenomenon.

In order to solve such fault, firstly determining a suitable standard changing ratio $\Delta\%$, and when the capacity between the waste fluid injection point and the tip of the burner is G (unit: liter (L)), and the flux flowing at that time is F (unit: L/second), the attainment time found by G÷F is set to T, and $\Delta$÷T is calculated as a changing ratio $\delta$ (unit: %/second). Although the value of $\Delta$ should be taken into a consideration according to the air-combustion ratio control method of the boiler intended and the setting situation of the excessive air, etc., it can be responded by choosing about 3% of $\Delta$ in general. If the $\Delta$ value becomes smaller, the above-mentioned transitional phenomenon will be eased, but since the changing ratio of the injection ratio becomes small, changing time for the injection ratio becomes longer. Incidentally, if it has 1L of G and F with 1L per second, the $\delta$ value becomes 3% per second and the change of injection ratio 3% per second is permitted, but if F decreases to 1/10, it becomes 0.3% per second and the change of injection rate 0.3% per second is permitted.

In addition, it is desirable to change the injection ratio by $\delta$ calculated from the above-mentioned calculating formula in principle. However, for the practical use, it performs a repetitive operation like: once the injection ratio is made to change by 1%, wait until the measured value at the fuel flux meter 5 reaches a part of the G value, then make another 1% change when it reached, then wait again until it reaches the G value. Apart from the method which changes the injection ratio according to the passing flux like the repetitive operation, it can also substitute for a method where the injection ratio is made to change according to the time like: simply once the injection ratio is made to change by 1% and wait for a certain time to go on, then changing 1% and again wait for a certain time to go on.

The target ratio determined with the target ratio change time controller 62 is sent to a fuel flux signal together with the main waste fluid proportionality controller 65, calculated here and the target waste fluid flux is determined. Fundamentally, since a signal from the main waste fluid flux meter 15 and the target waste fluid flux should be matched, the opening adjustment for the main waste fluid flux adjustment valve 14 is performed using the PID means. However, if the burner 9 causes a burner supply pressure change according to the fuel flux, the injecting point pressure will change with a change in the fuel flux. If the opening of the control valve is the same and its injection point pressure changes, the flux will flows where its quantity differs from the waste fluid quantity as expected in temporary. In the long run it will be rectified by the feedback signal from the main waste fluid flux meter 15, however in the injection control after the oil quantity adjustment valve as mentioned above, the temporary injection ratio change will cause a serious problem to the stabilization of the combustion, and this change is opposite of what is desired, and if the opening of the main waste fluid flux adjustment valve 14 is constant, it becomes: an increase of the fuel flux → an increase in the pressure of the waste fluid injection point → a reduction in the differential pressure around the main waste fluid flux adjustment valve 14 → a decrease in the main waste injection flux, (it will be opposite if it is a reduction in the fuel flux) and it may cause a very serious failure depending on the type of the burner 9.

Generally a high-speed response is difficult for the main waste fluid flux meter 15 due to its measurement principle. On the other hand, the pressure detection has a quick response and can capture such changes accurately. In the case of an incompressible fluid like the waste water, it makes relatively easy to calculate the theoretical passage flux by detecting the opening as well as the before and after valve differential pressure of the main waste fluid flux adjustment valve 14, and performing the an arithmetic processing at the pressure difference compensation operation machine 63 based on the detection result. Therefore, it enables to prevent the change of the waste fluid flux which is not desirable as mentioned above.

Moreover, although the composition becomes a little complicated, the same effect can be obtained as per the above-mentioned pressure difference compensation operation machine 63 by allocating two of the main waste fluid flux system adjustment 14 serially - providing the above-mentioned flux adjustment function to one control valve and the function of the differential pressure adjustment valve to keep the before and after differential pressure of the control valve which has a flux function constant.

In addition, in the composition where the transfer means and the flux control means were united like the sub-waste fluid or the additive agent injection to be described, the pressure change of the injection point causes a change in the injection ratio. Also in such an injection method, it can carry out the injection ratio control with a higher accuracy or stability according to a change in the injection point pressure by rectifying the leaking flux inside of the pump.

On the other hand, the sub-waste fluid ratio determined with the multi-point injection ratio setting machine 64 is sent to the sub-waste fluid proportionality controller 66 together with a fuel flux signal, and is calculated here, and then the sub-waste fluid flux as a target is determined. In the case of the sub-waste fluid pump 22 which is a rotation speed control from the positive displacement pump, once the sub-waste fluid flux which should be poured is defined, frequency which should be output from the VVVF device is determined by its own as the theoretical discharge amount per rotation is already known. Therefore it determines the standard frequency first, but since there may be a case that the theoretical discharge amount has no pressure difference between before and after the pump, it is practically preferable that it is adjusted to the pressure difference of the line and outputs the markup compensation coefficient. The sub-waste fluid ratio is mostly agreeable theoretically in this situation, however, since it generates an error on the actual flux due to a debasement of the pump efficiency, a change in the viscosity, etc. by a change over time, it is desirable to rectify with a signal from the sub-waste fluid flux meter 25. Furthermore, if it is in the positive displacement sub-waste fluid pump 22, it is more likely to decline the capacity efficiency by a change over time. If the capacity efficiency is sharply down from the initial performance, since the deviation of the actual discharge amount based on the standard frequency determined from the above theoretical discharge amount and the pressure between before and after the sub-waste fluid pump 22, and targeted discharge amount become large, the rectification by a signal from the sub-waste fluid meter 25 is fundamental. Therefore, by detecting the size of this deviation it detects a decrease of the capacity efficiency of the sub-waste fluid pump 22 accordingly, and the process to recover the decrease of the capacity efficiency by such means as the maintenance and the exchange of the sub-waste fluid pump 22 is effective.

The merge point with the fuel of the sub-waste fluid is constituted before the fuel flux gauge 5 (upstream side) and before the fuel flux adjustment valve 4 (upstream side). Such composition is advantageous when making a mixed ratio change sharply. That is, with the adoption of this composition, since the injection ratio of the sub-waste fluid is increased while the opening of the fuel flux adjustment valve 4 is fixed, the fuel flux will decrease conversely as the passing flux of the fuel flux adjustment valve 4 is fixed. And since the mixed flux of the sub-waste fluid and the fuel is measured by fuel flux meter 5, it can be realizable as a composition ratio of the sub-waste fluid from 0% to 100% theoretically. Therefore, such injection method is especially effective for the injection of the waste fluid that is almost the same as the fuel calorific value.

Moreover, with the injection method of the intermediate calorific value waste fluid which is the calorific value of the waste fluid that is half the level of the fuel, using the same waste fluid for both the main waste fluid injection line B and the sub-waste fluid injection line C in the present embodiment, and selecting the same injection ratio respectively, its calorific value sprayed from the burner 9 where the fuel flux adjustment valve opening 4 is fixed, becomes equal even when it is or is not injecting the waste fluid. Therefore, like the present embodiment, having the main waste fluid injection line B as well as the sub-waste fluid injection line C is very effective for processing this kind of the waste fluid which has the intermediate calorific value. Also, it writes in addition that it is possible for the waste fluid with any calorific value to match the two spray calorific value mentioned above if the main waste fluid injection ratio and the sub-waste fluid injection ratio are suitably adjusted with the calorific value of the waste fluid.

When the sub-waste fluid is a liquid with the comparatively high viscosity, the rotation speed control method with the gear type pump is the most effective among the positive displacement pump which has both as the transfer means and the flux control means for sub-waste fluid pump 22 in the present embodiment. With this method, while adjusting the sub-waste fluid, it also performs its transfer simultaneously by changing a rotation speed of the motor connected to the pump with the frequency conversion machine, such as the VVVF device 68. As such the pump format where the transfer means and the flux control means can be realized by the rotation speed control, there is a rotation capacity pump like a vane pump, a screw pump and a root pump. And it is suitable for the reciprocating pump, such as a diaphragm type and a piston type, etc., which lowers the pulsation by the combination of various pump elements and the discharging timing.

Then, the additive agent injection is described below.

[Additive Agent Injection Control]

In the case of the present embodiment, the additive agent proportionality controller 67 which constitutes the additive agent flux control means receives a signal from the main waste fluid flux meter 15, and outputs a proportionality signal to the additive agent pump 52 based on the injection ratio of the additive agent preset in this additive agent proportionality controller 67. In the case of the additive agent pump 52 in the present embodiment, the theoretical discharge amount per pulse output from the additive agent proportionality controller 67 is determined for a diaphragm type pump called an electromagnetic pulse drive type. Therefore, in the proportionality controller 67, it becomes a proportionality control operation to send the pulse sequence calculated with the waste fluid flux signal and the predetermined injection ratio to the additive agent pump 52.

Since the diaphragm pump used as the additive agent pump 52 is generally of an excellent quantitative nature, it does not become a serious problem in the normal operation even if there is no additive agent flux meter 55. However, if the safety of the waste fluid injection to the boiler fuel is secured by injecting an additive agent, as it is assumed to cause a serious problem when the additive agent is not injected for whatever reason, it is important to detect abnormalities by the flux detection means, such the additive agent flux meter 55, a flow detection machine, a pulsation detection machine, etc.

Moreover, depending on the type of additive agent, since there is a case that is desirable to inject into the fuel system, in that case, what is necessary is to change the merge point of the additive agent into the fuel supply line A. Also, if it is more convenient that the control target of the injection ratio is the fuel amount instead of the waste fluid amount, it just needs to output a flux signal which the additive agent proportionality controller 67 receives from fuel flux meter 5.

According to the first embodiment above, with the industrial boiler equipment which is designed to supply stably the steam according to the steam requirement loads of such manufacturing process, the waste fluid discharged from the plant can process efficiently and safely by the abundant combustion heat of the fuel which is burned for a purpose of steam generation. Also, since the thermal energy which the waste fluid has is changed to the steam energy of high utility value and can be reused, it can achieve two issues which are the processing cost reduction and the fuel reduction without applying a significant change in the existing equipment.

[Second Embodiment]

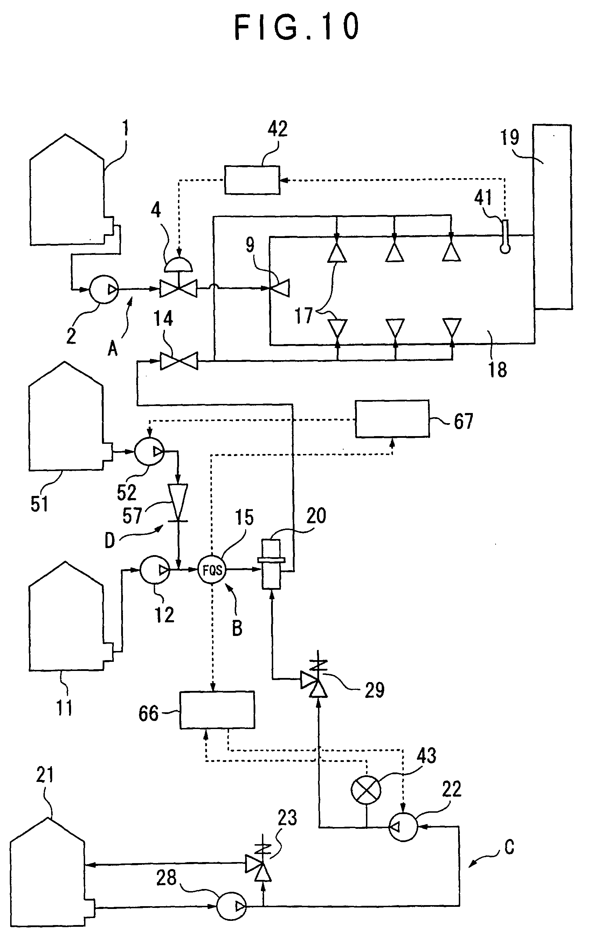

Fig. 10 is a block diagram of the equipment which performs the waste oil injection to the incineration waste water by the waste fluid incinerator (industrial combustion equipment) concerning the second embodiment of the present invention. The waste fluid assumed in the present embodiment is solvent system waste oil, and its gravity or viscosity is very specific, and since it is presumed that it dissociates with waste water extremely for a short time, the composition which adds the surface-active agents as an additive agent has also been added.

In addition, since the basic composition of a waste fluid incinerator is the same as that of Fig. 23 which is the explanation of the waste fluid incinerator explained with the conventional technology, only a different part is explained, explanation is omitted by attaching the same mark to a common part. It omits similarly about the same composition as the first embodiment mentioned above. It is the same with other below-mentioned embodiment.

Since the present embodiment assumes a waste solvent as the sub-waste fluid and the waste water with the same character as water and little calorific value as the main waste fluid, the one with a high emulsification capability is selected by the mixer 20 arranged at the injection line B. The main waste fluid flux 15 detecting the main waste fluid flux is simultaneously arranged.

The sub-waste fluid of the waste solvent is pressurized using the sub-waste fluid booster pump 28 from the sub-waste fluid tank 21 near the production process, and is supplied to the sub-waste fluid pump 22. The sub-waste fluid pressure adjustment valve 23 is arranged as a means to adjust the discharge pressure of the sub-waste fluid booster pump 28, and the excessive sub-waste fluid is returned to the sub-waste fluid tank 21.

The sub-waste fluid pump 22 of this the present embodiment is a diaphragm type, and serves both as the transfer means and flux control means of sub-waste fluid. The pressure dispatch machine 43 is located at the exit side of the sub-waste fluid pump 22, and the sub-waste fluid injection line C unites at the main waste fluid injection line B in the mixer 20 via the sub-waste fluid cracking valve 29.

When a pump which is an excellent quantitative nature like the diaphragm type pump, and the sub-waste fluid cracking valve 29 with the structure where the sub-waste fluid without adding a certain amount of pressure does not flow to the main waste fluid, are combined, the pressure dispatch machine 43 can also serve as a flux detection means by detecting the pressure of the sub-waste fluid. The setting pressure of the sub-waste fluid cracking valve 29 is set up higher than the exit pressure of the sub-waste fluid booster pump 28, and the flux accuracy of the sub-waste fluid improves by setting it so that the sub-waste fluid is not injected into the main waste fluid when the sub-waste fluid pump 22 does not operate, and the sub-waste fluid interception valve for intercepting the sub-waste fluid becomes unnecessary.

The additive agent is stored in the additive agent tank 51, a fixed quantity transfer is carried out with the additive agent pump 52, and it unites at a waste water line via the additive agent check valve 57. At this time, if the juncture of an additive agent and the main waste fluid is at the upper stream side than the juncture of the sub-waste fluid, a position will not be chosen particularly.

If combustion of fuel is started with a waste fluid incinerator and the temperature of the combustion room 18 reaches the certain temperature, the main waste fluid flux adjustment valve 14 is adjusted, and waste water is sprayed to a burner. Since the burner temperature may show a fall tendency by the spray of the waste water, the amount of fuel increases by the temperature adjustment machine 42 (temperature dispatch machine 41) of a waste fluid incinerator, and burner temperature is kept constant and it is balanced.

Although an injection of the sub-waste fluid is started in this state, the additive agent pump 52 is made to work before the injection, and the additive agent is added beforehand in the main waste fluid. For the process where it targets a waste fluid processing like a waste water incinerator, since its spray amount of the main waste fluid is fixed and there is no problem, the additive agent is also usually satisfactory with the fixed flux. It is because it is hard to become the cause of a serious failure even if spray of the main waste fluid stops and only the additive agent is injected into a line.

The injection ratio of the sub-waste fluid is recorded beforehand in the sub-waste fluid proportionality control machine 66, and it controls the amount of injection of the sub-waste fluid pump 22 at the target amount of injection. Although the sub-waste fluid injected into the main waste fluid is emulsified by the mixer 20, at this time, since the additive agent of the surface-active agent was added to the main waste fluid, it is sprayed from the waste fluid spray appliance 17 maintaining its emulsification state and heat decomposition is performed.

Since the sub-waste fluid has heat quantity if the emulsified sub-waste fluid is contained in the main waste fluid, the temperature of the combustion room 18 begins to rise. The amount of fuel is reduced with the temperature adjustment machine 42 (temperature dispatch machine 41) of a waste fluid incinerator, and the temperature of the incineration room 18 is kept appropriate.

When changing the rate of injection of the sub-waste fluid, by using a means such as the target ratio change time control machine, omitted in the illustration, and by changing the injection ratio gradually, the burden of the temperature adjustment machine 42 (temperature dispatch machine 41) decreases, and the burner temperature is kept stable, and it becomes cheap.

As mentioned above, by the second embodiment, while to process simultaneously waste fluid with quantity of heat, such as waste solvent, in the waste fluid incinerator originally designed for waste water becomes usable without a large design change, the heat quantity of waste solvent contributing to the rise of combustion room temperature enables it to contribute to curtailment of the fuel for waste fluid incineration.

Moreover, in the case of the incinerator of the waste fluid which originally has heat calories, such as waste oil, the temperature of the combustion room 18 becomes too high and the furnace is easy to be damaged. However, since it is also possible to process it by making the waste water emulsified in the waste oil and the effect of reducing furnace temperature by addition of waste water without the heat quantity is also expected, it has a big advantage too.

[Third Embodiment]

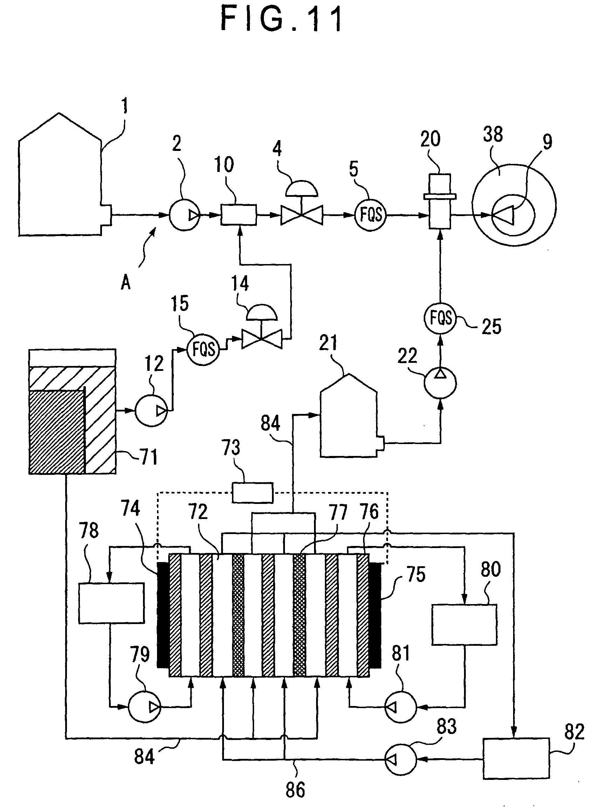

Fig. 11 is a block diagram of the boiler equipped with the emulsion separation means and salts concentration reduction means concerning the third embodiment of the present invention. Although the emulsion waste fluid processed by this boiler is separated in two layers of the outline waste oil and waste water then discharged, it assumes the imperfect emulsion waste fluid which has been emulsified in part. As for the oil ingredient of waste oil, it has self-inflammability and the ingredient which can be burned direct by the burner 9. Mineral salt, such as salt, is contained in the waste water.

Emulsion waste fluid is stored in the emulsion separation tub (emulsion separation means) 71. Since the waste oil separated upwards is oil, it is burned with the burner 9 via the waste fluid transfer pump 12, the waste fluid flux adjustment valve 14, the waste fluid flux meter 15, and the mixer 20. Since this equipment is a warm water boiler, flux control of the waste fluid flux adjustment valve 14 is carried out by the temperature adjustment function by the side of the boiler 38.

In addition, as the emulsion separation promoting method, which raises the separation speed of emulsion, there are: the one using the specific gravity difference between oil and water like a centrifuge; the one raising the separation nature of emulsion by adding the surface-active agent called emulsion breaker; the method making the function of the surface-active agent lose by adding salt, alcohol, etc; the method making only a continuation layer passing by using an extra filtration film with its hydrophilic or hydrophobic nature, and it is desirable to use them properly according to the kind of each waste fluid.

The waste water separated downward contains mineral salt, and is supplied to the ion exchange film device (salts reduction means) 72 via the waste water line 84. As shown in a figure, the cation film 76 and the anion film 77 are arranged in the ion exchange film equipment 72, and voltage is added to the plus electrode 74 and the minus electrode 75 by the direct-current power source 73. The ion ingredient in waste water shifts by the ion exchange film equipment 72 to an adjoining concentration liquid line, and the waste water is desalted (ion exchange film method).

Here, it is assumed that the salts include: the metal ingredients making up the base; the salt which consists of inorganic or the organic acid; the metal which generates a base or inorganic acid after the combustion due to the nature of the present invention; halogen and sulfur, organic nitrogen, etc.

According to the present embodiment, the concentration liquid tank 82, the anolyte tank 78, and the cathodic liquid tank 80 are circulating waste water via the ion exchange film device 72 by the concentration liquid circulation pump 83, the anolyte circulation pump 79, and the cathodic liquid circulation pump 81, respectively. The electrolyte liquid in those tanks performs a concentration adjustment and the adjustment for the concentration or an ingredient carried out. However, since the ingredient of a non-electrolyte is not mixed, in the waste water discharged at the time of concentration adjustment, its processing is easy.

Moreover, the desalted waste water which flows in the desalination waste water line 84 becomes usable also for the combustion chamber and this is accompanied by heat exchange like a boiler as its salt concentration falls. It is proportionally mixed with waste oil and combusted like the first e mentioned above via the sub-waste fluid pump 22 and the sub-waste fluid flux meter 25.

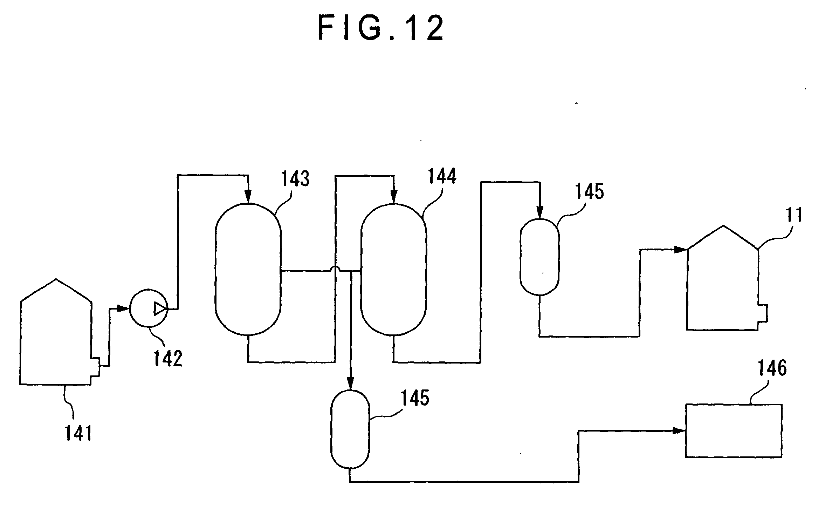

Fig.12 is the example of the modification of salts reduction means realization, and shows an example of the composition by the ion-exchange resin method. Incineration disposal by the same method as the above is possible for the waste fluid with which salts concentration has been diluted.

In this kind of method, the undiluted solution in the undiluted solution tank 141 is pressurized by the undiluted solution pump 142, and goes through the positive ion exchange resin tower 143 and the negative ion exchange resin tower 144, and the ion exchange of an electrolyte ingredient is performed, and desalination water is stored in the waste fluid tank 11. Since ion-exchange resin reaches saturation according to the amount of ion exchange, it is reproduced by chloride, sodium hydroxide, etc. Although some organic ingredient may also be blended at the time of reproduction, as its concentration is thin, it is stored in the waste water tub 146 and drained by the biological processing etc.

When heavy metal ion etc. is contained in the undiluted solution, it is possible by putting it through the chelating resin tower 145 to decrease the processing of the waste fluid and the heavy metal concentration in the waste water. Although the heavy metal ion is alternatively removable since chelating resin makes the specific metal ion and the specific complex and combines them firmly, there is the one either reproducible or not reproducible depending on its nature. Although it is advantageous in terms of cost in the case of the reproducible one, a heavy metal will be contained during the reproduction waste water. However, since organic substance concentration decreases, it is advantageous in post-processing.

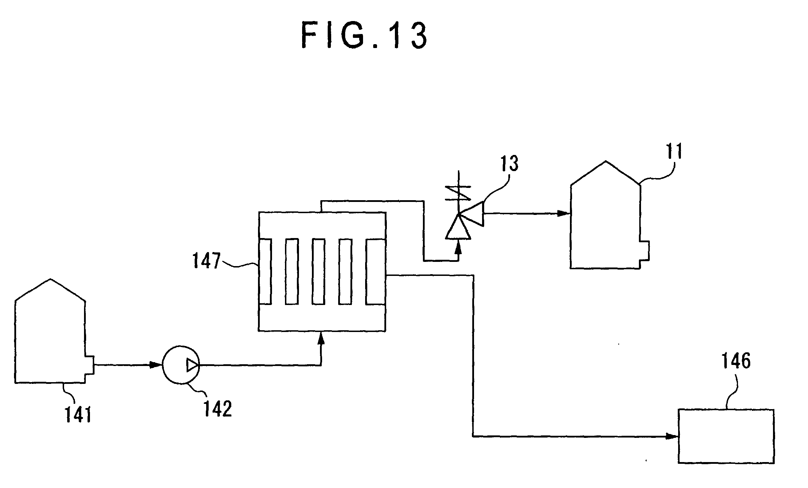

Fig. 13 is a salts reduction means by the filtration condensing method, and it shows an example of the method of reducing the amount of moisture in waste fluid by the extra filtration or the reverse intrusion filtration method and also discharging the salts of a low molecular weight with water. It is a method with many advantageous points that the rate of reuse of a heat calorie becomes high by raising the organic substance concentration in the waste fluid as an object for processing, or the merit is large when it is used by the method by which the quantity which can be added to fuel like this system is restricted since it has the combustion room protection effect by reducing salts concentration and the volume of waste fluid can be reduced.

In such a method, the undiluted solution is pressurized with the undiluted solution pump 142 and is maintained at the certain pressure with the waste fluid pressure adjustment valve 13 via the filter 147. Therefore, the pressure differentiation is produced in the primary and the secondary side of the filter 147, and moisture and salts with a low molecular weight are discharged in the waste water tub 146. The waste fluid with which the concentration has risen as a result is stored in the waste fluid tank 11 via the waste fluid pressure adjustment valve 13, and is processed as waste fluid by this method.

Extra filtration or the reverse osmosis membrane is suitable for the filter medium used for filtration, and it is desirable to use them properly depending on a filtration target and purpose. Especially in the case of the reverse intrusion filter, the salts dilution effect of waste fluid is larger by using a film with a coarse mesh than by the one aiming at pure water manufacture. In addition, using a filter with a more coarse mesh for protection for clogging in the front stage does not have a problem. Although the hollow fiber membrane is drawn by a diagram as an image, there are also methods, such as a spiral film and a flat film.

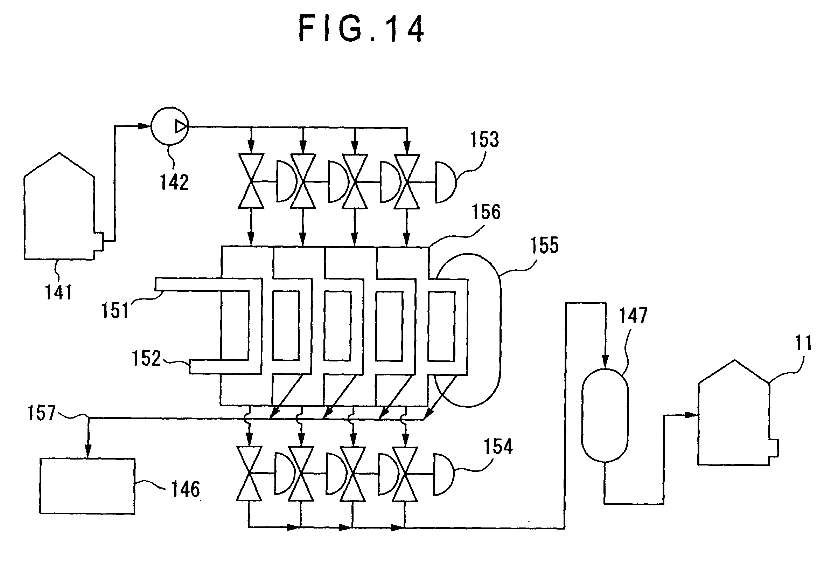

Fig. 14 is a block diagram of the salts reduction means by the evaporation condensing method, and it shows an example of a method of reducing the moisture in waste fluid with the multiple effect type concentrator, performing a separation removal of the salts with high deposit nature melted underwater, and decreasing the salts in waste fluid.

By such a method, an undiluted solution is pressurized with the undiluted solution pump 142, and is supplied to each concentration room of the multiple effect can 156 via the undiluted solution control valve 153. The steamy line 151 is connected to the first stage of a concentration room, and an internal undiluted solution is heated. When the undiluted solution in the first stage is heated, internal liquid evaporates, and the evaporated steam heats up the undiluted solution in the second stage, and fluid concentration is done using the latent heat effectively.

Once the condensed undiluted solution becomes a certain concentration, the concentration liquid discharge valve 154 opens, and via a filter 147, it is stored in the waste fluid tank 11 and is processed by this processing method. Although as for the filter 147 the best one should be just chosen suitably according to the deposit thing of the salts, even if there is no filter 147, there is no problem since precipitation removal can be carried out in the waste fluid tank 11 when it is expected that a deposit thing is very little.

Moreover, although the drain condensed on the first step of drain line 152 is reusable as drain recovery water of a boiler, the drain condensed on the waste water drain line 157 may be reusable according to composition of an undiluted solution. In addition, although omitted in the diagram, the steam and the lap are installed in each drain line 152 and 157 and when performing the multiple effects below 100 degrees C, a vacuum pump is needed for the waste water drain line 157.

Furthermore, in this method, even if it is an undiluted solution by its nature with a low salts concentration, its effects other than the salts reduction purpose are also large, such as the amount of incineration processing by this method can be decreased, and the amount of fuel and the possible processing quantity increase by increasing the amount of evaporation of the boiler performing incineration processing.

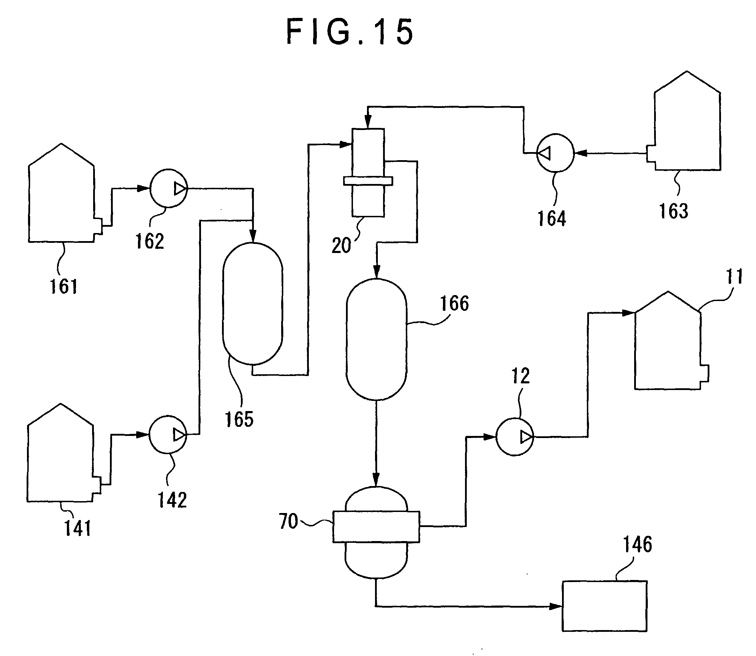

Fig. 15 is a block diagram of the means using the salts reduction means for the waste fluids like waste oil in which the above-mentioned method cannot be used, namely, the alkaline metal, or the alkaline-earth-metals processing method, and shows an example of the processing method using the alkaline metal more specifically for the purpose of removing a chlorine ingredient. In this method, since those powerful desalination action of metal calcium or metal magnesium of the metal sodium and the metal potassium, or the metal natrium of alkali is used, and this processing method is the method which can perform incineration disposal of the waste oil or the waste water, the effective processing can be done.

According to this method, although an undiluted solution is supplied to the first reaction tub 165 with the undiluted solution pump 142, at that time, the metal alkali oil stored in the metal alkali oil tank 161 with the metal alkali oil transfer pump 162 is transported and mixed with an undiluted solution. Since the alkaline metal or the alkaline-earth metals is extremely sensitive in the air, the metal alkali oil is the slurry oil in which the safety of the handling is enhanced by dispersing the alkaline metal power in the oil, and breaking contact from the air by dispersing alkaline metal powder in oil.

If ingredients, such as halogen and sulfur are in an undiluted solution (waste oil), the alkaline metal becomes a reducing agent and engulfs them as alkaline metal salt. Although this reaction advances also at a normal temperature and under a normal pressure, other means, such as heating, can be provided in order to shorten reaction time.

The waste oil which the primary reaction ended is supplied to the second reaction tub 166 via the mixer 20. At this time, water is supplied with the feed pump 164 and it becomes emulsion. Although the surface-active agent etc. is unnecessary when the mixer 20 has an excellent emulsification function, a surface-active agent, etc. is usually used and the water is made to be distributed evenly.

By the water acting to the metal alkali, a reaction progresses rapidly and it deprives an organic substance of halogen and sulfur, turns into halogenation alkali or sulfuration alkali, and melts into the emulsion water. The waste oil is put in the centrifuge 70 which will make it to separate into an oil ingredient and a water ingredient, the oil ingredient is sent to the waste fluid tank 11 as waste fluid, and the water ingredient is stored in the waste water tub 146.

By this method, it is possible to process the waste fluid without generating harmful organic substances by incinerating the oil for handling the alkaline metal stably, and further removing the waste water stored in the waste water tub 146 with the above-mentioned salts reduction means.

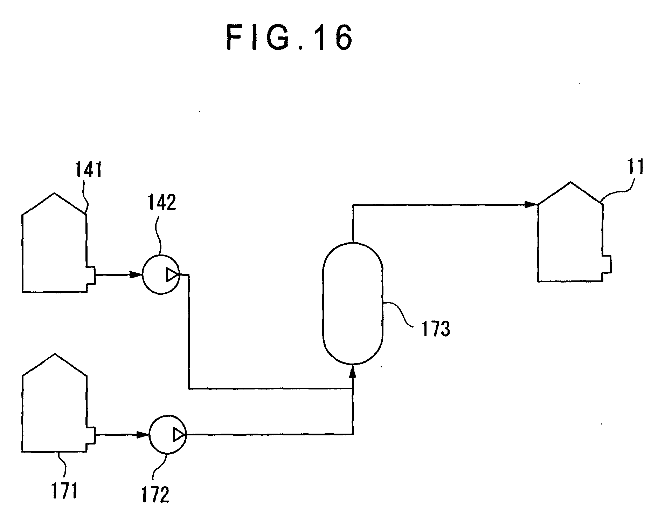

Fig. 16 is a block diagram showing an example of the salts reduction means by the denitrification processing method. The nitrogen ingredient contained in amine, a nitrate, etc. is discharged as NOx in the exhaust gas in the incineration processing method by this method. Therefore, if it is removed beforehand as $N_2$, the processing with less environmental load will be able to be attained.

Although an undiluted solution is transported with the undiluted solution pump 142 and supplied to the denitrification bioreactor 173, the alcohol simultaneously stored in the alcoholic tank 171 is impregnated using the alcoholic pump 172. The denitrification bioreactor 173 is the biological reaction machine which decreases the total nitrogen concentration in an undiluted solution by making nitric acid nitrogen or amine harmless as $N_2$ by using alcohol etc. as an energy source under the reduction atmosphere, such as nitric acid reduction bacteria and denitrification bacteria.

In the present technology, it is common to use living things for the means to make the nitrogen ingredient in the waste fluid harmless as $N_2$, and it generally requires using alcohol (methyl alcohol and ethyl alcohol). In the case of this incineration processing method, it is advantageous as it can be disposed as it is, even if there is the alcohol which is to be added remaining in the waste fluid in order to make the denitrification bioreactor 173 act.

As mentioned above, although a technical development in the salts reduction means continues variably, it can become the outstanding waste fluid processing method with very little environmental load by combining respectively independent or multiple technology with this incineration processing method, and it can naturally be able to applied also to the waste fluid of the first and the second embodiment.

In the case of emulsion waste fluid with bad stability, the calorific value of waste fluid is unstable if the incineration disposal performance is attempted as it is, and is not suitable for a combustion equipment which requires the calorific value stabilized like industrial combustion equipment. As the above third embodiment, it can be applied also to the industrial combustion equipment by once dividing it into an oil ingredient and a water ingredient, and making them to the emulsion precisely ratio-controlled in front of the burner. Besides, it also becomes easy to perform the desalination processing by once dividing it into an oil ingredient and a water ingredient, and the bad influence by ash or the halogen ingredient can also be solved simultaneously.

[Fourth Embodiment]

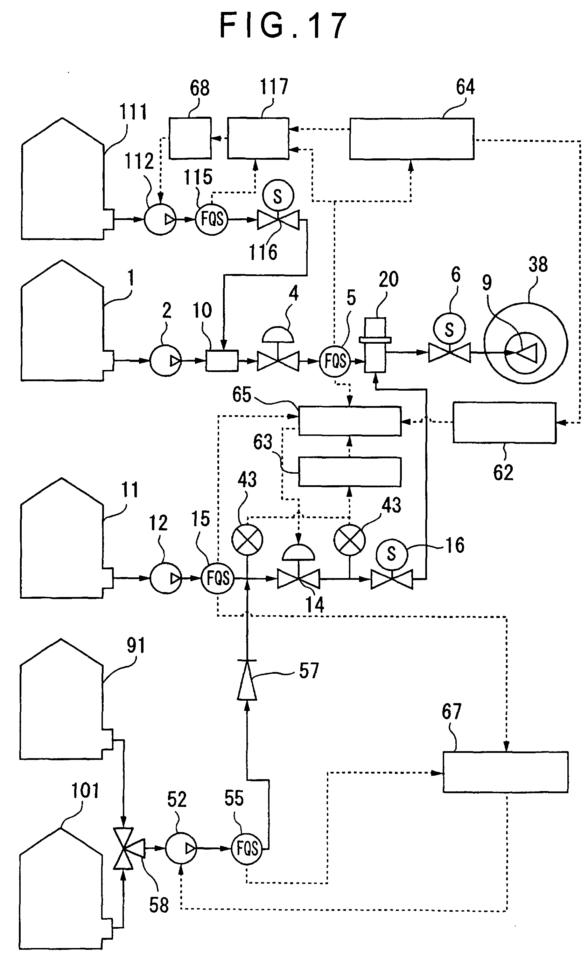

Although it is the Fig. 17 and the block diagram showing the industrial combustion equipment concerning the fourth embodiment, the present embodiment is the form of the system which can perform injection control of three additive agents of an anticorrosive additive agents, an surface-active agent, and a viscosity thickener, and is equipped with the completely same composition as the first embodiment in the composition of which the waste fluid is proportionally injected into fuel on the course burned by the burner 9.

The anticorrosive, preventing metal from corrosion by distributing it in the fuel, forms the molecule film on the surface of the metal, and makes water, acid, etc. not adhere directly to the metal side, is contained in the anticorrosive tank 111. Simultaneously, this action acts also as a lubricant in order to prevent a direct contact of metal. Although this is a kind of the surface-active agent, and since it does not melt into water, as shown in a figure, it is added to the fuel side.

Moreover, if metal soap with calcium or magnesium is put in, it is also possible to prevent the halogen and phosphorus in the waste fluid invading the steel materials in an exhaust gas, and the corrosive protection effect of a combustion room side can be expected in this case.

Here, the surface-active agents in the present embodiment, which appears below, is the chemical with the action which changes into an emulsification state the liquids which are not originally mixed like water and oil due to having the lyophilic group and hydrophilic group in one molecule as later mentioned.

A lyophilic group is in the surface-active agent, and shows a composition part which has a character that is easy to melt into oil. Generally it consists of an ingredient of the petroleum origin, and an ingredient of the animals-and-plants oil origin, and, as for its basic composition, straight chain alkyl, benzene and its derivative, etc. are used.

Hydrophilic group is in the surface-active agent, and shows a composition part which has a character that is easy to melt into water, and an organic compound with a character that is easy to melt into water like acid, a base, alcohol or sugar, is used. Hydrophilic group is classified into the positive ion surface-active agent, the negative ion surface-active agent, the non-ion system surface-active agent, etc. especially according to the character when melting into water.

HLB is the index which shows the balance between a lyophilic group and a hydrophilic group in one molecule of the surface-active agent, and the value to 0-20 is taken and the higher the value the higher hydrophilic.

In the present embodiment, the surface-active agent that is used to decrease the surface tension between water and fuel oil, and to maintain the emulsification state, is in the surface-active agent tank 91.

The mode of action for oil and water by the surface-active agent is not an overstatement where it is governed by the following three elements, the character of lyophilic, the character of a hydrophilic, and HLB. On the other hand, this is why the surface-active agents with multi type and multi use, has been developed. Therefore, when making emulsification to add to the different ingredient from oil or water like the waste oil or the waste water, it is necessary to use the optimal surface-active agent naturally according to its characteristics. However, since it is impossible to choose different surface-active agents every time as necessary and to put it into the additive agent tank, it becomes capable to a wide range of waste oil and various kind of waste fluid by preparing a number of surface-active agents blended among the expected waste oil and various kind of waste fluid.

For example, when application of lamp oil for fuel oil, methyl acetate for waste oil, 5% of ethyl alcohol for waste water, are considered, the following three kinds of correspondence should be considered, lamp oil and water, lamp oil and waste fluid, and lamp oil and waste water. The optimal HLB for the lamp oil and the water is 6 to 9, however, HLB will increase if waste oil is blended, and around 9 to 11 will become optimum level. However, in the case of blending alcohol, since the one which contains alcohol as a hydrophilic group will increase its performance, it showed a good emulsification nature for the three condition when it used polyoxyethylene alkyl ester for HLB9, and 50:50 mixture of polyoxyethylene alcohol ether for HLB11.

On the other hand, for the viscosity thickener, if it melts into water or oil, it is a thing which is a chemical substance that has a character to increase the solvent viscosity by itself and is modified to be dissolvable in the solvent for a cellulose or a polysaccharide, or which is a kind of high polymer substances to dissolve into the solvent, and has an effect to increase the viscosity by adding it into the target solvent. Therefore it is preferable that it has no substances like ash content or halogen causing harmful influences to the burner. Typically, there are a carboxyl-methylcellulose, carragheenan, guar gum, a poly acrylic acid, a polyethylene-glycol, etc.

The above-mentioned surface-active agent is the thing to accelerate and maintain the emulsification by having the character to melt into both oil phase and water phase, however, if one of the character and the character of the surface-active agent do not match, it conversely causes a harmful effect such as blocking of emulsification or not producing exert effects. That is, the medical substance used as the emulsion breaker is also a kind of the surface-active agents. On the other hand, a viscosity thickener melts into either the oil phase or the water phase and is added as a purpose of maintaining the state emulsified by raising its viscosity. Therefore, it is unlike the surface-active agent that accelerates emulsification, however if it can operate stably in either the oil phase or the water phase as it is hardly influenced by the thing with the opposite character conversely, it will be effective for the combination when the surface-active agent is not suitable for.

Then, with the present embodiment, the viscosity thickener which is used to maintain an emulsification state by increasing the viscosity of water and making it difficult for the dispersed water to recombine easily, is in the viscosity thickener tank 101.

This viscosity thickener in the case of a water-soluble viscosity thickener for example, if it is melted in water, viscosity rises and operation of injection etc. is very difficult. Therefore, in general, although it is arbitrarily mixed with water like alcohol, the viscosity thickener disperses in the shape of slurry to a solvent which does not dissolve. If viscosity thickener slurry touches with waste water, it will dissolve gradually and rises the viscosity of waste water. Especially like the present embodiment, if an injection point can be changed to a surface-active agent, it is useful that it can use as changing the after-viscosity thickener injection switching valve to the surface-active agent side, purging the middle section piping with the surface-active agent, and preventing solidification of the injection point.

The proper uses of the surface-active agent and the viscosity thickener are described below.

With waste fluid, in the case of the water or the liquid which has almost the same property as water, it is possible to set the surface-active viscosity thickener switching valve 97 to the side to which a surface-active agent flows, and to carry out proportionality injection of the surface-active agent into waste fluid.

However, when the waste fluid contains much water-soluble solute, such as an electrolyte, alcohol, and aldehyde, it carries out a surface-active agent to be insoluble, or an emulsification performance deterioration. In the case of such waste fluid, the maintenance of an emulsification state becomes useful by increasing the viscosity of the waste fluid itself a little. Therefore, with such waste fluid, it is possible to set the surface-active viscosity thickener switching valve to the side to which a viscosity thickener flows, and to carry out proportionality injection of the viscosity thickener into

In addition, when the waste fluid is acidity, there is a concern that corrosion by the waste fluid touching the metal surface in the fuel piping might occur. In such a case, it is possible to carry out the proportionality injection of the anti rusting agent.

As mentioned above, a certain level of waste fluid (waste water and waste oil) is not always discharged regularly, and it is assumed in the case which are the kinds of waste fluid that differ for every line of the manufacturing process, etc. In such a case, like the present embodiment, a number of additive tanks 91,101,111 are prepared, and which becomes the equipment suitable for processing of a broad range of waste oil and waste fluid by preparing a specific additive respectively on each tank 91,101,111

In addition, although an operator may carry out manually the change of these additives after checking the kind of waste fluid using the switching valve 58 etc., it can be configured to select and inject optimal combination of additives automatically in accordance with the kind of waste fluid.

[Fifth Embodiment]

Next, the fifth embodiment related to the present invention is explained. The present embodiment is the method of incineration processing of the lubricant contained in the additive to improve capability safely, and to determine the acceptable injection ratio of waste oil using a safety evaluation means.

In addition, an acceptable injection ratio is the maximum injection ratio which can carry out incineration disposal of the waste fluid of lubricant safely by this processing method, and it is desirable to determine the type of equipment.

Since the lubricant which become waste fluid forms the oil film and reduces abrasion and heat generation mainly in the slide portions of bearing or equipment, it is used as a purpose to extend equipment life. However, in addition to this, the required performance of lubricant is used for a variety of uses as following: in terms of characteristic such as electric insulation, anticorrosive nature, and low steam pressure nature.

(Lubricating Oil)

The purpose of the use of the lubricant, is the most popular and is used for various equipments which have mechanical slide portions, such as engine oil, and turbine oil, gear oil.

Engine oil: It is used for internal combustion engines, such as a gasoline engine and a diesel engine, and it has the desired effect to disperse not only lubricating ability but also the carbon, sulfur, moisture associated with combustion. An additive is used to achieve those effects.

Turbine oil: The purposes of use differ a little between a steam turbine and a gas turbine. Since it is not heavy loading and there is a possibility that it is affected to gas turbine blade, ashless additive is used and it is useful lubricating oil for this processing method.

Hydraulic actuation oil: Since it has a thing for light loading based on the oxidization inhibitor, and also it has a special grade depending on its usage such as corrosion proof, and for special grade focused on wear proof nature, high-temperature properties, low-temperature properties, etc.

Compressor oil: It is used under the bad condition such as oxidization by air or water interfusion. It traditionally has a short life duration and has an application that dislikes a metal ingredient in the mist, there is also a product which used the ashless additive.

Gear oil: A number of additive is used in connection with various requirement and miscellaneous product for gear oil also. In the case of the gear oil used especially at the air and its interface, it requires a caution that silicone oil etc. may be mixed for foaming prevention and.

Other lubricating oil: various lubricant agent such as refrigerant oil, and bearing oil, sliding surface oil, corrosion proof oil, metalworking fluid, general lubricating oil, etc., are used industrially.

(Other Lubricants)

Insulation oil: Using the insulation of fuel, it is used to prevent heat dissipation such as a transformer and a breaker, and oxidization degradation. An additive is used to improve insulation or corrosion behavior.

Heat media oil: When the heat source exceeds 200 degrees C low pressure is required. It is the oil used for heating medium boiler that is used instead of a steamy boiler. Low steam pressure nature (an inflammable ingredient does not evaporate.) and heat stability are searched for.

On the other hand, although an additive is made to add at the time of use of lubricant, the purpose of use and the main composition are indicated in Table 1. In addition, from an environmental view point, it is desirable to use the lubricant which consists additive agent that does not contain an ash ingredient among the additive agents called ashfree system additive agent.

Table 1

| Type | Objective | Typical substance |
|---|---|---|
| Metal system cleaning agent | Soot, water, sulphuric distribution | phenate, sulfonate, phosphonate, etc. of Ba, Ca, Mg, etc. |
| Ash-free type cleaning agent | Soot, water, sulphuric distribution | Alkenyl succinic acid imide, Alkenyl succinic acid ester benzylamine, etc. |
| Oxidation inhibitor | Oxidization degradation prevention of lubricating oil | dithiophosphoric acid zinc, hindered phenol, aromatic amin, phenol sulfide, etc. |

Table 1   (continued)

| Type | Objective | Typical substance |
|---|---|---|
| Friction prevention agent Extreme pressure agent | Prevention of friction Prevention of gnaw | dithiophosphoric acid zinc, phosphate ester, Phosphorous acid ester, terpene sulfate, olefin sulfide, sulfuration fat and fatty oil, etc. |
| Friction modifier | Prevention of friction Prevention of gnaw | Dithiophosphate of Mo, dithiocarbamate fatty acid, those ester, amide, phosphate ester etc. |
| Anticorrosive agent | Prevention of corrosion | alkali of sulfon acid or alkaline earth metal salt alkenyl succinic acid derivative |
| Viscosity index Improver | Viscosity maintenance under high temperature | poly methacrylate, ethylene-propylene copolymer, styrene-butadiene copolymer |
| Pour-point depressant | Fluidity maintenance under low temperature | alkyl naphthalene, polymethacrylate |
| Antifoaming agent | Prevention of foaming | Silicone, polyacrylate |

The above seed lubricant becomes waste oil and is discarded due to the lose original function by the generation of sludge, degradation of an additive, oxidization degradation of base oil, etc.

Under the present circumstances, there are ash, halogen, phosphorus, a heavy metal, etc. as an ingredient which has influence on incineration by combustion. Such an ingredient is contained in an additive in many cases.

Ash is the substance specified by JISK2272, and it is the ingredient of lubricant which is not decreased in the 700-800 degree C temperature region in the lubricant, and various metal ingredients, Si, etc. correspond. In addition, with the following combustion safe evaluation means, it is desirable to show every ingredient since each component is important for safety evaluation.

Halogen which is ingredient of F, Cl, Br, I, etc. separates at high temperature and invades steel materials etc., and is also defined the permission concentration in an exhaust gas. As for especially with Cl, it is better to remove before processing if it is possible since it not only becomes the generating factor of dioxin, but leads also to degradation of a burner and a fire-resistant thing. Moreover, it is necessary to suppress within fiducial level, the maximum allowable emission that is defined in the Clean Air Act.

Moreover, F may be rarely contained in the lubricant for high temperature etc., but it must be careful to handle. If F is spread from a chimney, it is not preferable for the environment, it will be considered that it is better to forbid pouring in principle.

Although it counts as the above-mentioned ash when there is a metal ingredient, when only phosphorus is contained, in order for phosphorus to sublimate, it is necessary to specify phosphorus independently.

Moreover, although it is almost uninfluential when phosphorus is processed simultaneously with calcium or magnesium, when those metal ingredients do not exist, the corrosion by phosphoric acid etc. becomes a problem.

Therefore, after investigating all the ingredients in lubricant, it is necessary to determine the safe pouring rate.

Although counted also to ash, the thing containing heavy metal ion such as a lead and mercury is classified as a heavy metal, and needs to remove by pretreatment in this processing method.

In regard to heavy metals, in this processing method, although it should be removed with a pretreatment in principle, it is desirable to forbid pouring if it is not applicable.

In addition, although low melting point substances such as zinc, sodium, potassium, is desirable to use the fewest possible quantity, since the influence is depending upon burner furnace load or the rate of addition, it is necessary to unite the form of equipment. Moreover, when ingredient of halogen etc is not contained, the risk of fusion of a metal ingredient can be reduced by adding only in a low combustion region.

High melting point substances of calcium, magnesium, etc., have the comparatively high allowance, and if they are only these ingredients, they can allow the comparatively high pouring rate.

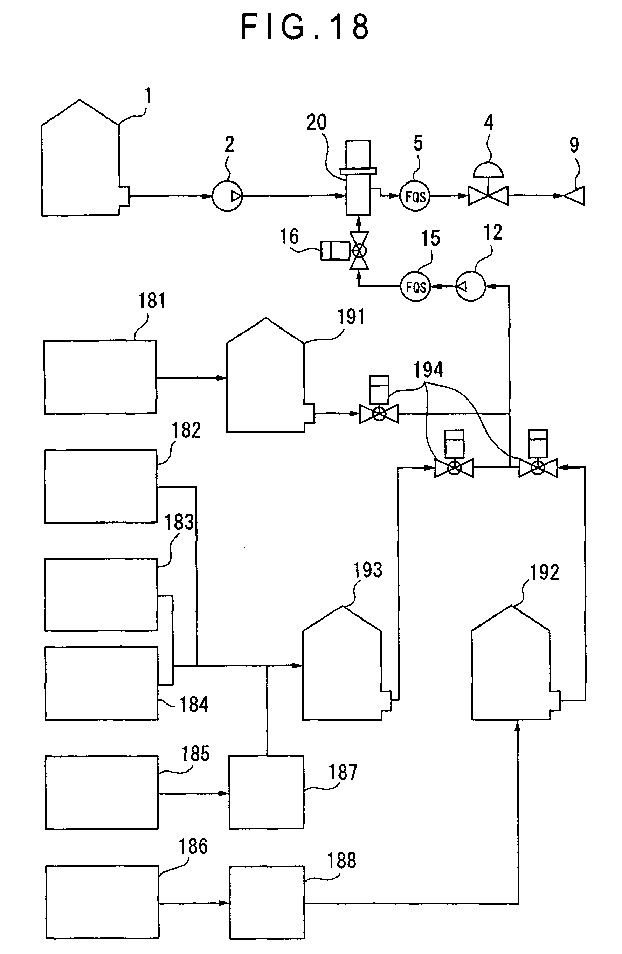

Fig. 18 is a block diagram for realizing the present embodiment, and used oil is periodically discharged as waste oil from diesel engine 181, gas turbine 182, steam turbine 183, screw compression machine 184, light load oil pressure starting device 185, and heavy load oil pressure starting device 186 each.

Since removal processing of ash etc. is difficult for the lubricating oil (lubricant) of a diesel engine 181, although it is stored by the low permission ratio tank 191 and the oil of a gas turbine 182, a steam turbine 183, and the screw compression machine 184 are the dedicated oil respectively, since [the ingredient which has influence on combustion] is hardly contained, it is stored by the high permission ratio tank 193. Moreover, by the removal means, although the waste oil of light load oil pressure operation equipment 185 has some metal ingredient, since it is mostly removable, it is stored in high permission ratio tank 193 after processing by the first metal removal processing 187. Although the waste oil of high load oil pressure operation equipment 186 can be removed most metal ingredients by the second metal removal processing 188, since it can remove neither silicone oil nor phosphoric acid ester, it is stored by the middle permission ratio tank 192.

As mentioned above, by classifying waste oil for every acceptable injection ratio, if it applies within the acceptable injection ratio for every lubricating oil in which the tank was stored when processing by this processing method, it can be incinerated safely.

[Sixth Embodiment]

The sixth embodiment of the present invention is the industrial combustion equipment which established a waste fluid miller means to distribute the gelled solid in waste fluid into the waste fluid concerned in the waste pouring line.

The gel-like solid is what soluble cellulose and a polysaccharide or a high polymer substance made solid mesh structure and become solidified into a gel, and indicates what contains waste fluid in the crevice between mesh structures. When it is going to filter by the filtration means while it has been unsettled although these are comparatively soft substances in many cases, it becomes a lot of solids and disposal is needed.

The Miller means, for example, gives mechanical shearing power to a gel solid to destroy the above-mentioned solid mesh structure, make waste fluid free in the mesh structure concerned, and decreases the amount of residual substances by the filtration means. Moreover, by raising the capability of the miller means concerned, when cellulose or the high polymer substance which form mesh structure do not contain nonflammable substances of such as metal, those frame itself can carry out combustion disposal by the combustion means.

In addition, in order to prevent the re-combination after milling if needed, it is also effective to add additives, such as a surface-active agent.

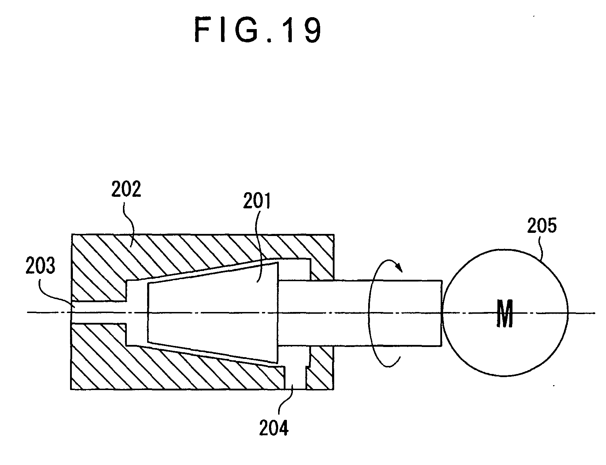

Fig. 19 is a cross sectional diagram showing the miller mixer 200 which is an example of the miller means. In the miller mixer 200, receive the strong shearing power by the friction power of fluid when fluid passes the narrowest gaps between the pillar stand-like rotation rotor 201 and stator 202, an internal solid is crushed, and it is possible to comminute gel substance which has hardness to some extent by using a hard material for the material of a rotor 201 and stator 202.

In addition, although the usual mixer etc. can be used, what is necessary is just to choose the miller means of the optimal form according to a size or hardness of what is going to grind.

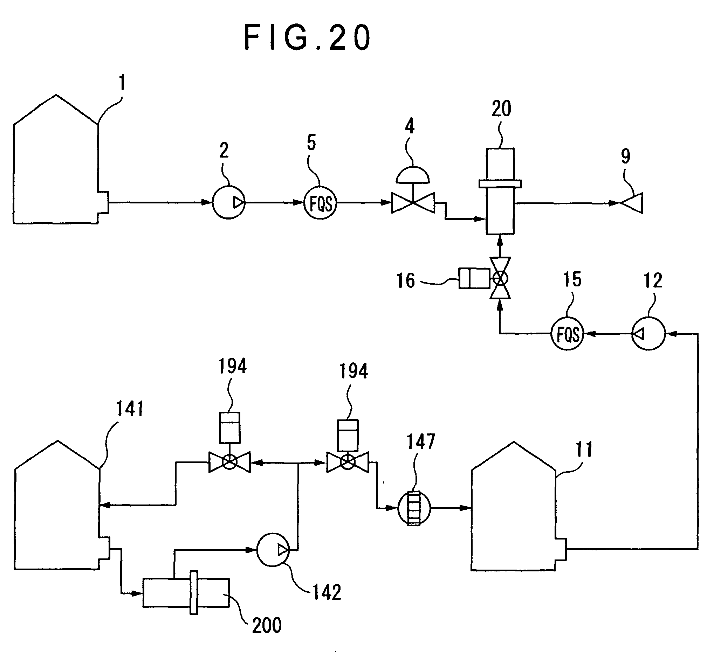

Fig. 20 is a block diagram showing an example of processing using the Miller mixer 200 for waste fluid containing the flesh of fruit. The undiluted solution containing flesh is in the undiluted solution tank 141. In order that the undiluted solution pump 142 may prevent occurrence of obstacle by flesh, the miller mixer 200 is arranged into the entry side. The change valve 194 is used to change circulation to the undiluted solution tank 141 and supply to the waste fluid tank 11.

In the case of undiluted solution containing flesh etc., the change valve set into circulation side against undiluted solution tank 141, then operate the miller mixer 200 in circulation and it grinds the flesh in the liquid in the undiluted solution tank 141. By the timer etc., if circulation operation is performed certain amount of time, change a change valve and the waste fluid after processing will be supplied to the waste fluid tank 11. In the case, in order to prevent the obstacle of a non-ground thing of an emergency, a filter 147 is arranged to remove the foreign substance which can not be ground.

[Seventh Embodiment]

The seventh embodiment of the present invention is industrial combustion equipment provided the slurry means to slurry the activated carbon which adsorbed the organic compound or carbide discharged from a carbonization processing means.

Used activated carbon means the activated carbon lost activity which adsorbed the organic solvent or the organic, etc. in the present embodiment.

Ideally, although reproducing using an activated carbon reproduction furnace is desirable, if little use or plural sorts of activated carbon, since the initial cost of an activated carbon reproduction furnace cannot be recovered, abandonment disposal is carried out in many cases.

Moreover, carbide means, it overheats organic waste in the condition of the air is sealed, then uses an organic matter as carbide and reduces it.

Since it is stable substance, although there is no burden to environment greatly even if it carried out reclamation disposal as it is, for this reason, the reuse method was desired for reclamation disposal expense.

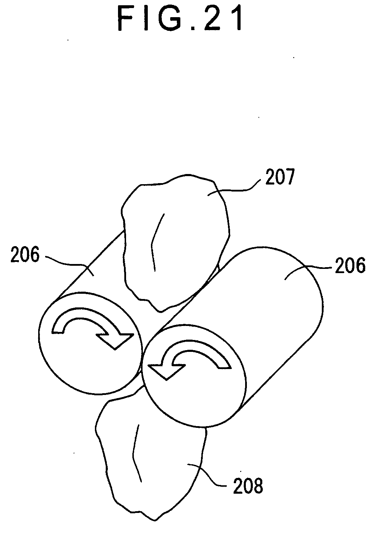

The crushing machine equipped with the roller 206 as shown in Fig. 21 as a slurry means is used. Although activated carbon and carbide (only henceforth carbide) are hard substances, since they also have brittle behavior, they can miniaturization easily with a roller 206. By letting a crushing subject (carbide) pass in the small crevice between the rotating rollers 206, it breaks easily.

If the carbide which turned minutely is mixed with a surface-active agent or a viscosity thickener, it is dispersed easily on water and become slurry. Just, the India ink does in this way and is manufactured.

In the process of crushing, since the metal ingredient and carbide which are crystallized dissociate, it is also possible to separate carbide and a metal ingredient by the principle of floatation by using the surface-active agent suitable for the contained metal ingredient.

It is confirmed that carbide slurry which used water as the solvent has very good combustibleness by the catalytic action of the carbon with water called water gas reaction at the time of combustion

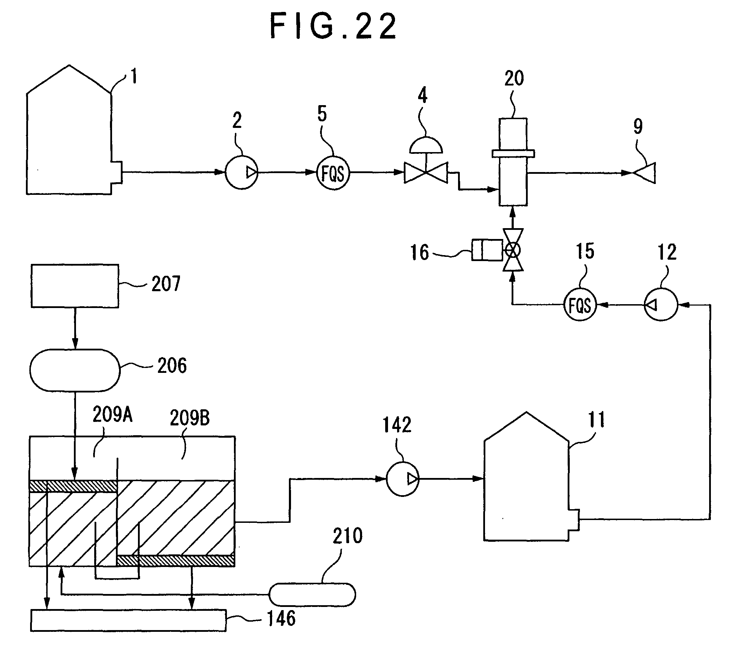

Fig. 22 is a block diagram of the industrial combustion equipment constituted to use incineration disposal for carbide of slurry. Carbide 207 is ground by the roller 206 and thrown into flotation tub 209A. In flotation tub 209A, a surface-active agent is thrown in according to water and the metal ingredient contained, a fine bubble is generated by compressed air 210, and the metal which adhered on the surface of the bubble is stored in the drainage tub 146.

Slurry liquid moves to stationary tub 209B arranged next in accordance with the quantity of the slurry and water which are sent to flotation tub 209A. Since the heavy ingredient of the specific gravity by which flotation was not carried out precipitates within stationary tub 209B, it stores in a drainage tub by blowing as necessary.

In accordance with the level of flotation tub 209A, it is transported to the waste water tank 11 with the undiluted solution pump 142, and incineration disposal is carried out by this processing method.

[Eighth Embodiment]

Although the eighth embodiment of the present invention omits illustration, it is the industrial combustion equipment which have any of the means, the sterilization means to sterilize the detrimental bacteria which exist in waste fluid, a disinfection means to disinfect, a control means to control multiplication of detrimental bacteria, an interception means to intercept detrimental bacteria mix into waste fluid, or the multiplication means of useful bacteria to promote combustion of waste fluid.

A sterilization means indicates a means to destroy a microbe using the following processing.

Chemical treatment: Although it is a means using medicine with bactericidal and the hypochlorous acid, cationic soap, etc. are generally known, since incineration disposal is possible in this processing, incineration disposal is safely possible even if a little detrimental ingredient to human bodies such as formalin.

Heat treatment: It is the processing which destroys bacteria by heating.

Ozone treatment: Processing which destroy bacteria by the oxidization power of ozone.

Ultraviolet treatment: Processing which destroys DNA of bacteria by the ultraviolet.

Sterilization: Processing which destroys all microbes including anthrax spore and cystoid spore by thoroughly performing a sterilization means.

Semi-sterilization: One of the sterilization means which processing which decreases a microbe.

A disinfection means indicates a means to remove a microbe using the following processing.

Filtration sterilization: Processing which removes all microbes.

General disinfection: Processing which does not specify a microbe but removes a part.

A bacterial control means indicates the means using the following processing.

Bacteriostatic: Processing which checks or prevents multiplication of a microbe. Refrigeration, freezing, etc.

Antibacteria: Processing which controls or checks multiplication to a specific microbe.

Preservation from bacteria: Processing which does not specify a microbe but controls multiplication.

Preservation from decay: Processing which prevents degradation by the detrimental noxious organism (multiplication control of a putrefactive microbe).

A bacterial interception means indicates a means by which bacteria prevent from touching waste fluid.

The breeding means of a useful bacillus indicates a means to proliferate a useful bacillus (bacillus which controls the bacillus which causes an obstacle to processing like scum or abnormal odor in this processing), by processing of fermentation etc

The present embodiment is to make processing of waste fluid easy by preventing generation of defective transport of waste fluid, fetid odor, and gas, etc., using any of the means above. These means is operated depend on each characteristics such as, inject into waste fluid or, arranged in the tank and/or piping or, affecting waste fluid, and there is no problem to combine those.

For example, the obstacle by culturing bacteria can be prevented by installing an ultraviolet germicidal lamp in the waste fluid tank 11 and 21 in Fig. 1, or putting formalin into the undiluted solution tank 141 in Fig. 19 as a disinfectant.

**Industrial Availability**

The industrial combustion equipment and the waste fluid processing method in the present invention are that can be applied for processing waste fluid produced along side the production equipment in factories, etc., and the industrial activities of medical and research institutions, etc.

**Claims**

1. An industrial combustion equipment for processing waste fluid including a combustion means to bum liquid fuel in a burner, a fuel supply line for supplying fuel to the combustion means, and a fuel transfer means as well as a fuel flux control means both provided at the fuel supply line, the industrial combustion equipment comprising:

   a fuel flux detection means to detect the fuel flux of the fuel supplied by the fuel supply line;
   a mixing means to mix the fuel and the waste fluid to be processed;
   a waste fluid injection line for injecting the waste fluid which joins the fuel supply line located on the upstream of the mixing means or the mixing means;
   a waste fluid flux detection means provided at the waste fluid injection line to detect the flux of the waste fluid;
   a waste fluid flux control means to control the flux of the waste fluid;
   a waste fluid transfer means to transport the waste fluid;
   a multi-point type injection ratio setting means that can set a target injection ratio at multi-points for the waste fluid at any fuel flux; and
   a proportionality control means that determines, if needed, a target waste fluid flux based on the target injection ratio set by the multi-point type injection ratio setting means as well as by a flux signal sent from the fuel flux detection means, and outputs a proportionality signal to the waste fluid flux control means,

   wherein the proportionality control means uses at least one point of the target injection ratio of the multi-point injection ratio setting means as an unsteady time injection ratio which is less than the ratio in a steady time flux region when the fuel flux reaches an unsteady time flux region, in order to inject the waste fluid with the flux based on the unsteady time injection ratio, or to be able to stop injection of the waste fluid, and
   wherein the proportionality control means includes at least any one function among a cognition function to check whether the injection of the waste fluid is regularly performed based on the target injection ratio with the use of at least one information of the variation between or each value of an actual waste fluid flux found by a detection signal sent from the waste fluid flux detection means and the target waste fluid flux, or the variation between or each value of the target injection ratio and an actual injection ratio found by the actual waste fluid flux and a detection signal sent from the fuel flux detection means; a compensation function to rectify the variation in the information; and a safety function to stop the injection of the waste fluid or to inject equal or less amount than a safety ratio when the variation in the information becomes equal to or more than a predetermined regular amount or when the actual injection ratio exceeds the predetermined safety ratio.

2. An industrial combustion equipment for processing waste fluid including a combustion means to bum liquid fuel in a burner, a fuel supply line for supplying fuel to the combustion means, and a fuel transfer means as well as a fuel flux control means both provided at the fuel supply line, the industrial combustion equipment comprising:

   a mixing means that mixes the fuel and the waste fluid to be processed, and is located between the fuel flux control means of the fuel supply line and the combustion means;
   an injection ratio setting means that can set a target injection ratio for the waste fuel at any fuel flux; and
   a target ratio changing time control means to control the time until the waste fluid reaches the target injection ratio.

3. An industrial combustion equipment for processing waste fluid including a combustion means to burn liquid fuel in a burner, a fuel supply line for supplying fuel to the combustion means, and a fuel transfer means as well as a fuel flux control means both provided at the fuel supply line, the industrial combustion equipment comprising:

a waste fluid injection line which joins between the fuel flux control means of the fuel supply line and the combustion means;
a waste flux control means provided at the waste fluid injection line;
an injection ratio setting means that can set a target injection ratio for the waste fluid at any fuel flux;
a proportionality control means to output a proportionality signal to the waste flux control means based on the target injection ratio set by the injection ratio setting means; and
a pressure detection means provided at the exit side of the waste fluid flux control means of the waste injection line, or between the combustion means of the fuel supply line and the fuel flux control means, as well as a pressure correction means to output a correction signal to the proportionality control means based on a pressure signal sent from the pressure detection means; or alternatively, a differential pressure control means that keeps a differential pressure to be constant between the upstream and the downstream of the waste fluid flux control means.

4. The industrial combustion equipment for processing the waste fluid according to any one of claims 1 to 3,
    wherein the waste fluid injection line includes a main waste fluid injection line for injecting a main waste fluid with a lower calorific value than that of the fuel, and a sub-waste fluid injection line for injecting a sub-waste fluid with the substantially same calorific value as that of the fuel,
    wherein the main waste fluid injection line is provided to join the fuel supply line which is the upstream of the mixing means, or the mixing means, and
    wherein the sub-waste fluid injection line is provided to join the fuel supply line which is the upstream of the fuel flux control means.

5. The industrial combustion equipment for processing the waste fluid according to any one of claims 1 to 4,
    wherein the waste fluid is emulsion solution made of the main waste fluid and the sub-waste fluid both of which have different affinities, and
    wherein the waste fluid injection line includes an emulsion separation means to separate the emulsion solution into the main waste fluid and the sub-waste fluid, and the waste fluid injection line is divided into the main waste fluid injection line for injecting the main fluid and the sub-waste fluid injection line for injecting the sub-waste fluid at the downstream of the emulsion separation means.

6. An industrial combustion equipment for processing waste fluid including a combustion means to burn liquid fuel in a burner, a fuel supply line for supplying fuel to the combustion means, a fuel transfer means as well as a fuel flux control means both provided at the fuel supply line, a waste fluid spray means to spray waste fluid to the burner, and a waste fluid injection line for injecting the waste fluid to the waste fluid spray means,
    wherein the waste fluid is made of a main waste fluid and a sub-waste fluid which have different affinities and are the separately prepared,
    wherein the waste fluid injection line includes a main waste fluid injection line for injecting the main waste fluid, and a sub-waste fluid (injection line) for injecting the sub-waste fluid,
    wherein the main waste fluid injection line has a main waste fluid flux detection means to detect a main waste fluid flux, and an emulsification means to emulsify the main waste fluid and sub-waste fluid, and
    wherein the sub-waste fluid injection line is provided to join the main waste fluid injection line which is the upstream of the emulsification means, or the emulsification means,
    the industrial combustion equipment comprising:

a sub-waste fluid flux detection means to detect the flux of the sub-waste fluid, a sub-waste fluid flux control means to control the flux of the sub-waste fluid, and a sub-waste transfer means to transfer the sub-waste fluid, each of which is provided at the sub-waste fluid injection line; and
a sub-waste fluid proportionality control means to output a proportionality signal to the sub-waste fluid flux control means based on the flux signal of the main waste fluid flux detection means.

7. The industrial combustion equipment for processing the waste fluid according to any one of claims 1 to 6, further comprising:

an additive agent injection line that injects an additive agent into the fuel, the waste fluid or a mixed-solution of the fuel and the waste fluid; and
an additive agent flux control means to control the flux of the additive agent based on a flux signal sent from any one of the three flux detection means, the fuel flux detection means, the waste fluid flux detection means, and the main waste fluid flux detection means.

8. The industrial combustion equipment for processing the waste fluid according to any one of claims 1 to 6, further comprising:

a plurality of additive agent injection lines to inject an additive agent into the fuel, the waste fluid or a mixed-solution of the fuel and the waste fluid,

wherein each of the additive agent injection lines is provided to be able to inject the additive agents respectively having different characteristics.

9. The industrial combustion equipment for processing the waste fluid according to any one of claims 1 to 8, wherein the waste fluid injection line has a salts concentration reduction means to lower the salts concentration of waste fluid.

10. The industrial combustion equipment for processing the waste fluid according to any one of claims 1 to 9, wherein the waste fluid injection line has a waste fluid miller means to disperse a gelled solid in the waste fluid into the waste fluid.

11. The industrial combustion equipment for processing the waste fluid according to any one of claims 1 to 10, further comprising a slurry means for forming into slurry a carbide discharged from a activated carbon which has adsorbed an organic compound, or a carbonization processing means.

12. The industrial combustion equipment for processing the waste fluid according to any one of claims 1 to 11, further comprising any one of means such as a sterilization means to sterilize harmful bacteria which exist in the waste fluid, a bacteria elimination means to eliminate bacteria, a control means to control multiplication of the harmful bacteria, an interception means to intercept the harmful bacteria to be mixed into the waste fluid and a useful bacteria multiplication means to multiply useful bacteria which promote combustion of the waste fluid.

13. A waste fluid processing method using an industrial combustion equipment comprising the step of processing waste fluid with the use of the industrial combustion equipment according to any one of claims 1 to 12.

14. The waste fluid processing method according to claim 13 using the industrial combustion equipment, wherein the waste fluid processing method uses as an additive agent a combination of a plurality of surface-active agents with which composition of either a hydrophile-lipophile balance, a lyophilic group or a hydrophilic group differs, when injecting the additive agent into the fuel, the waste fluid, or a mixed solution of the fuel and the waste fluid.

15. The waste fluid processing method according to claim 13 or 14 using the industrial combustion equipment, wherein the waste fluid processing method uses a viscosity thickener as an additive agent to increase the viscosity of the fuel and/or the waste fluid when injecting the additive agent into the fuel, the waste fluid or the mixed-solution of the fuel and the waste fluid.

16. The waste fluid processing method according to any one of claims 13 to 15 using the industrial combustion equipment, wherein the waste fluid processing method uses a lubricant with a characteristic which improves the lubricity of the fuel and/or the waste fluid as an additive agent, when injecting the additive agent into the fuel, the waste fluid or the mixed-solution of the fuel and the waste fluid.

17. The waste fluid processing method according to any one of claims 13 to 16 using the industrial combustion equipment, wherein the waste fluid processing method uses an anticorrosive with a characteristic which improves the corrosive protection nature of the fuel and/or the waste fluid as an additive agent, when injecting the additive agent into the fuel, the waste fluid or the mixed-solution of the fuel and the waste fluid.

18. The waste fluid processing method according to any one of claims 13 to 17 using the industrial combustion equipment, further comprising the step of determining an acceptable injection ratio in the case of the lubricant agent mainly used for the purpose of lubrication, as the waste fluid by using a combustion safety evaluation means.

EP 1 479 971 A1

# FIG.1

30

# FIG.2

# FIG.3

# FIG.4

EP 1 479 971 A1

# FIG.5

POLYGONAL LINE TYPE MULTI-POINT INJECTION RATIO SETTING MACHINE

EP 1 479 971 A1

# F I G . 6

POLYGONAL LINE TYPE TWO-POINT INJECTION RATIO SETTING MACHINE

# FIG.7

POLYGONAL LINE TYPE MULTI-POINT INJECTION RATIO SETTING MACHINE

# FIG.8

MULTI-STAGE MULTI-POINT INJECTION RATIO SETTING MACHINE

EP 1 479 971 A1

EP 1 479 971 A1

# FIG.9

# FIG.10

# FIG.11

# FIG.12

# FIG.13

EP 1 479 971 A1

# FIG.14

EP 1 479 971 A1

# FIG.15

EP 1 479 971 A1

# FIG.16

EP 1 479 971 A1

# FIG.17

# FIG.18

# FIG.19

# FIG.20

EP 1 479 971 A1

# FIG.21

FIG.22

EP 1 479 971 A1

# FIG.23

EP 1 479 971 A1

# FIG.24

EP 1 479 971 A1

## INTERNATIONAL SEARCH REPORT

| International application No. |
| --- |
| PCT/JP03/00738 |

**A. CLASSIFICATION OF SUBJECT MATTER**
Int.Cl⁷ F23G7/04, F23G5/02, F23G5/50, C02F1/02

According to International Patent Classification (IPC) or to both national classification and IPC

**B. FIELDS SEARCHED**

Minimum documentation searched (classification system followed by classification symbols)
Int.Cl⁷ F23G7/04, F23G5/02, F23G5/50, C02F1/02, C07B35/06, C07B37/06, A01N35/02

Documentation searched other than minimum documentation to the extent that such documents are included in the fields searched
Jitsuyo Shinan Koho 1940-1996 Toroku Jitsuyo Shinan Koho 1994-2003
Kokai Jitsuyo Shinan Koho 1971-2003 Jitsuyo Shinan Toroku Koho 1996-2003

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 50-49741 A (Toyo Tire and Rubber Co., Ltd.), 02 May, 1975 (02.05.75), Full text; Figs. 1 to 4 (Family: none) | 1-18 |
| A | JP 57-92086 A (Yakitsu Miru Kyodo Kumiai), 08 June, 1982 (08.06.82), Full text; Fig. 1 (Family: none) | 1-18 |
| A | JP 11-325442 A (Kawaju Reinetsu Kogyo Kabushiki Kaisha), 26 November, 1999 (26.11.99), Full text; Fig. 1 (Family: none) | 1-18 |

☒ Further documents are listed in the continuation of Box C.  ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 07 May, 2003 (07.05.03) | 20 May, 2003 (20.05.03) |

| Name and mailing address of the ISA/ | Authorized officer |
| --- | --- |
| Japanese Patent Office | |
| Facsimile No. | Telephone No. |

Form PCT/ISA/210 (second sheet) (July 1998)

**INTERNATIONAL SEARCH REPORT**

| International application No. |
| --- |
| PCT/JP03/00738 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 50-156280 A  (Asahi Chemical Industry Co., Ltd.),<br>17 December, 1975 (17.12.75),<br>Full text; Fig. 1<br>(Family: none) | 1-18 |

Form PCT/ISA/210 (continuation of second sheet) (July 1998)